# EUROPÄISCHE PATENTSCHRIFT

(11) **EP 1 990 860 B1**
(45) Veröffentlichungstag und Bekanntmachung des Hinweises auf die Patenterteilung: **16.05.2012**
(21) Anmeldenummer: 08006832.3
(22) Anmeldetag: 04.04.2008
(51) Int. Cl.: H01M 10/50, H01M 6/46, H01M 2/10, F28D 15/00, F28F 1/22

(54) **Antriebsbatteriebaugruppe eines Elektro-, Brennstoffzellen- oder Hybridfahrzeugs**
Motor battery component of an electric, fuel cell or hybrid automobile
Bloc de batterie d'entraînement d'un véhicule électrique, à cellules combustibles ou hybride

(30) Priorität: 07.05.2007 DE 102007021309
(43) Veröffentlichungstag der Anmeldung: 12.11.2008
(73) Patentinhaber: Valeo Klimasysteme GmbH, 96476 Bad Rodach (DE); Bayerische Motoren Werke Aktiengesellschaft, 80788 München (DE)
(72) Erfinder: Haussmann, Roland,, 69168 Wiesloch, (DE); Meijering, Alexander,, 80809 München, (DE); Diegelmann, Christian,, 80687 München, (DE)
(74) Vertreter: Prinz & Partner

(56) Entgegenhaltungen:
- DE-A1- 10 352 046
- DE-U- 7 439 582
- DE-U1- 9 002 249
- US-A- 5 756 227

## Beschreibung

Die Erfindung betrifft eine Antriebsbatteriebaugruppe eines Elektro-, Brennstoffzellen- oder Hybridfahrzeugs,nach dem Oberbegriff des Anspruchs 1.

Aufgrund der CO₂-Belastung der Umwelt durch reine Verbrennungsmotoren geht die Entwicklung von Antrieben für Fahrzeuge zum Transport von Personen oder Gütern zunehmend in Richtung Elektroantriebe, die Verbrennungsmotoren zumindest teilweise ersetzen. Die vorliegende Erfindung betrifft derartige Antriebsbatteriebaugruppen für Elektro-, Brennstoffzellen- oder Hybridfahrzeuge. Bei solchen Antriebsbatteriebaugruppen werden vorgefertigte, nach außen geschlossene Batteriezellen zu einer Hochvoltbatterie (übliche Spannungen 130 Volt für den sog. Mildhybrid und 360 Volt für einen Vollhybrid) zusammengeschlossen und in einem gemeinsamen Außengehäuse zusammengefaßt. Die Batteriezellen werden separat voneinander hergestellt, besitzen ein eigenes Metallaußengehäuse, das außenseitig mit Kunststoff ummantelt ist, um für eine elektrische Isolierung zu sorgen. Die Batteriezellen sind üblicherweise NiMH- oder Li-lonenbatteriezellen, die während des Lade- und Entladevorgangs Wärme erzeugen. Diese Batteriezellen dürfen aber ihre maximale Zelltemperatur von 55 bis 80° nicht überschreiten, was die Lebensdauer der Zellen verringern würde. Eine weitere Ursache für die Verringerung der Lebensdauer der Batteriezellen und damit der gesamten Baugruppe kann in einer inhomogenen Temperaturverteilung zwischen den Zellen sein. Es ist deshalb darauf zu achten, dass sich die Temperaturen zwischen den Zellen um nicht mehr als ±2 bis 5 K, vorzugsweise nur ±2 bis 3 K unterscheiden. Da die Zellen elektrisch in Reihe geschaltet sind, kann eine defekte Zelle für einen Totalausfall der gesamten Batteriebaugruppe sorgen. Es sind bereits Überlegungen angestellt worden, die Batteriebaugruppe durch ein aktives Fluid-Kühlsystem auf konstante Temperatur zu halten. Beispiele hierfür sind die DE 195 36 115 A1, die einen in Plattenstapel-Konstruktion aufgebauten Wärmeübertrager zum Gegenstand hat, die JP 2006 185 788 A2, welche ein sehr kompliziertes Luftkühlsystem mit gesteuerten Luftablenkfahnen zeigt, und die JP 30 93 172 A2, die eine Vielzahl von Wärmetauschern zwischen einzelnen Zellen vorsieht, was Platzprobleme schaffen könnte.

Die DE 103 52 046 A1 zeigt eine Kühleinrichtung für eine Batterie, bei der jede der einzelnen Batteriezellen in einer Zylindrischen Hülse aufgenommen ist. Der Raum zwischen den Hülsen wird in Längsrichtung der Batteriezellen von einem Kühlmedium durchströmt, um die Batteriezellen zu kühlen.

In der gattungsgemäßen DE 90 02 249 U1 ist eine mehrzellige Batterie beschrieben, bei der die einzelnen Batteriezellen in einem hohlwandigen Gehäuse angeordnet und durch hohlwandige Zwischenwände des Gehäuses voneinander getrennt sind. Die hohlen Wände des Gehäuses nehmen gewellte Zwischenbleche auf und werden von Kühlflüssigkeit durchströmt.

Die US 5 756 227 A zeigt eine Batterie mit einer Kühleinrichtung, bei der flache Kühlbleche zwischen die einzelnen Batteriezellen ragen, die rechtwinklig von einem weiteren Kühlblech abstehen und wärmeleitend mit diesem verbunden sind. Dieses Kühlblech wird von einer an seiner Außenseite angeordneten Kühlleitung gekühlt.

Die Erfindung schafft eine einfache, platzsparende, aktiv gekühlte Antriebsbatteriebaugruppe, die kostengünstig hergestellt werden kann. Durch die Erfindung soll die Lebenszeit der Batteriebaugruppe von zehn Jahren und mehr garantiert werden.

Durch die Erfindung sollen die teilweise anfallenden, abzuführenden Energiemengen von 300 bis 1.500 Watt wirksam abtransportiert werden, ohne dass dadurch das Volumen der Antriebsbatteriebaugruppe erhöht wird.

Dies wird bei der Antriebsbatteriebaugruppe der eingangs genannten Art durch die Merkmale des Anspruchs 1 erreicht. Die Erfindung sieht dünne, vom Rohr ausgehende Lamellen vor, die eine Festkörper-Wärmebrücke zwischen den einzelnen Batteriezellen und dem oder den mehreren Rohren darstellt. Solche Lamellen sind sehr dünn, damit platzsparend, erlauben einen schnellen Wärmeaustausch und sind leicht zu fertigen. Darüber hinaus sind die Lamellen aufgrund ihrer geringen Wanddicke auch problemlos an die Außengeometrie des Zellengehäuses anzupassen, so dass sie großflächig an ihm anliegen. Der Bereich des Rohres, an dem die Lamellen befestigt sind, befindet sich innerhalb des Zellenpakets, im Hohlraum zwischen benachbarten Batteriezellen. Dies führt zu kürzeren Wärmeübertragungswegen, wodurch auch innenliegende Zellen schnell gekühlt werden.

Die Lamelle ist also der Form des Außengehäuses der Batteriezelle zumindest abschnittsweise angepaßt, um von dieser die Wärme schnell in Richtung Rohr abtransportieren zu können.

Ein weiterer Vorteil der Erfindung ist, dass die Baugruppe ohne Änderung des Konzepts mit unterschiedlichen Kältemedien arbeiten kann. Z.B. kann als Kühlmittel ein Wasser-Glykolgemisch, R134a, CO₂ oder ein anderes alternatives Kältemittel eingesetzt werden. Auch das Gewicht der erfindungsgemäßen Antriebsbatteriebaugruppe ist geringer als im Stand der Technik, wo u.a. zahlreiche Wärmetauscher in die Batteriebaugruppe eingebettet sind. Die Lamellen lassen sich auch um die einzelnen Zellen herum führen, so dass an schlecht zugänglichen Stellen mit Platzproblemen für einen Wärmeabtransport gesorgt ist. Es bestehen auch mehr Möglichkeiten für die Leitungsführung des Rohres durch die Baugruppe. Die Rohrabschnitte oder die mehreren Rohrleitungen müssen nicht unmittelbar nahe der einzelnen Batteriezellen angeordnet sein, um eine gleichmäßige Wärmeverteilung über das Batteriepaket zu ermöglichen.

Als Rohre werden üblicherweise Metallrohre mit einer Wärmeleitfähigkeit von >40 W/m/K, insbesondere Aluminiumrohre, eingesetzt.

Die Rohre haben üblicherweise einen Außendurchmesser von lediglich 4 bis 10 mm.

Die Wanddicke der Rohre beträgt üblicherweise zwischen 0,3 bis 2 mm. Natürlich ist es, wie erwähnt, möglich, mehrere Rohre vorzusehen, die in Reihe oder parallel geschaltet sein können. Die Rohre lassen sich an einen Einlaßkollektor und einen Auslaßkollektor anschließen, von dem die Rohre ausgehen bzw. in den sie münden.

Als Lamellen werden dünne Bleche, insbesondere aus Aluminium, Kupfer oder einem anderen sehr wärmeleitfähigen Werkstoff verwendet, die gemäß der bevorzugten Ausführungsform eine Wärmeleitfähigkeit von 60 W/m/K bis 400 W/m/K aufweisen.

Die Dicke der Lamellen beträgt zwischen 0,1 und 2,5 mm, vorzugsweise zwischen 0,5 und 1,5 mm.

Wie sich herausgestellt hat, beträgt der optimale Innendurchmesser der Rohre zwischen 3 bis 6 mm bei einer Wanddicke von 0,3 bis 1 mm bei Verwendung von Wasser oder R 134 a als Kältemittel und 1,5 bis 4 mm bei einer Wanddicke von 1 bis 2 mm bei CO₂ als Kältemittel.

Üblicherweise sind an einem Rohr mehrere Lamellen vorgesehen, die am Umfang des Rohres verteilt angeordnet sind und eine oder mehrere Batteriezellen teilweise umschließen, um sie zu kühlen. Bis zu zehn Batteriezellen werden ausreichend mittels eines Rohres gekühlt, und eine Lamelle ist bis zu drei Batteriezellen zugeordnet.

Es ist möglich, dass eine Lamelle von mehreren Rohren ausgeht, d.h., z.B. mit seinen zwei entgegengesetzten Rändern an unterschiedlichen Rohren befestigt ist.

Gemäß der bevorzugten Ausführungsform ist vorgesehen, dass die Lamelle gegen das Zellengehäuse drückt. Damit soll ausgeschlossen werden, dass sich ein Luftspalt zwischen der Lamelle und dem Außengehäuse bildet und die Wärmeübertragung verringert wird. Ein weiterer Vorteil der Vorspannung besteht darin, dass Toleranzen des Außengehäuses der Batteriezellen aufgefangen werden können. Die Außengehäuse haben technisch bedingt nicht exakt alle gleiche Abmaße, sondern variieren innerhalb einer Toleranz, die durch eine gezielte Vorspannung der Lamelle aufgefangen wird. Hierzu werden die Position und Geometrie der Lamelle auf die kleinsten Abmaße einer Batteriezelle abgestimmt. Damit ist sichergestellt, dass selbst bei einer an der Untergrenze der Toleranz liegenden Batteriezelle die Lamelle immer sicher am Zellengehäuse anliegt.

In diesem Zusammenhang ist es vorteilhaft, wenn sich die Lamelle an wenigstens ein Zellengehäuse über eine Preßpassung an dessen Außenumfang förmlich anschmiegt, also die Form des Außengehäuses im wesentlichen annimmt. Auch hierzu ist die dünnwandige Lamelle besonders geeignet.

Wenn die Lamelle so weit um die Batteriezelle herum verläuft, dass sie selbstklemmend an ihr hält, ist eine formschlüssige Positionierung der Lamellen zur zugeordneten Batteriezelle oder den Zellen ohne zusätzliche Mittel möglich.

Auch die Wärmeübertragung zwischen der Lamelle und dem Rohr ist wichtig. Hierzu sieht eine Lösung vor, dass die Lamelle das Rohr abschnittsweise umschließt oder umgreift, so dass hier eine großflächige Wärmeübertragung möglich ist.

Die Befestigung der Lamelle am Rohr kann durch Kleben, Schweißen, Löten oder eine mechanische Befestigung erfolgen, wobei hier vorzugsweise die Lamelle unmittelbar am Rohr angebracht werden sollte zur Schaffung einer unmittelbaren Wärmeübertragung.

Die Lamelle kann das Rohr, ähnlich wie bei der Batteriezelle, teilweise unter Bildung einer Preßpassung oder komplett umgreifen, um so am Rohr befestigt zu sein.

Die Batteriezellen sind üblicherweise langgestreckte Körper, insbesondere zylindrische Körper wie kreiszylindrische Körper oder Quader, d.h. Körper mit einer Längsachse. In Richtung der Längsachse gesehen soll sich die Lamelle über mehr als 90° des Umfangs berührend am Zellengehäuse anlegen, um eine ausreichend große Wärmeübertragungsfläche zu gewährleisten.

Wenigstens 40 % der Außenumfangsfläche des Zellengehäuses sollten an der Lamelle anliegen, wie in einer Ausführungsform vorgesehen ist.

Die Batteriezelle oder die Batteriezellen können zwischen mehreren, an entgegengesetzten Außenumfangsabschnitten des Zellengehäuses angreifenden Lamellen geklemmt werden, wobei diese Lamellen auch mehreren Rohren oder Rohrabschnitten zugeordnet sein können. Die zuvor erwähnten Gesamtkontaktflächen können sich demzufolge auch aus mehreren Einzelberührflächen unterschiedlicher Lamellen an derselben Batteriezelle zusammensetzen.

Gerade bei der Ausbildung der Zellengehäuse in zylindrischer oder kreiszylindrischer Form lassen sich die Lamellen platzsparend unterbringen, wenn sie sich mäanderförmig oder, bei quaderförmigen Zellengehäusen, zinnenförmig an Zellen unterschiedlicher Reihen entlang durch das Zellenpaket erstrecken.

Es ist vorteilhaft, wenn Lamellenabschnitte oder Lamellen benachbarter Zellen einander nicht berühren, um den Lamellen einen ausreichenden Bewegungsspielraum zu geben, der für den Toleranzausgleich wichtig ist.

Das Kühlfluid führende Rohr kann im Bereich einer benachbarten Zelle abschnittsweise seitlich abgeflacht sein. Hierdurch ist es möglich, das Rohr in Zwischenräume zwischen benachbarten Batteriezellen ohne Querschnittseinschränkung unterzubringen, jedoch an Bauraum kritischen Stellen abzuflachen, um die Gesamtabmaße der Antriebsbatteriebaugruppe zu reduzieren. Insbesondere können die Abschnitte des Rohres, die am Außenrand des Zellenpakets liegen, abgeflacht sein. Das Rohr ist vorzugsweise stromauf- und abwärts des abgeflachten Abschnitts mit einem kreiszylindrischen Querschnitt versehen.

Das Rohr verläuft, wie bereits erwähnt, insbesondere zinnen- oder mäanderförmig durch das Zellenpakets. Das Rohr hat hierzu wenigstens einen längs der Längsachse der Zellen verlaufenden und wenigstens einen quer zu der Längsachse verlaufenden Abschnitt, wobei der quer verlaufende Abschnitt vorzugsweise den teilweise abgeflachten Abschnitt besitzt.

Bei kreiszylindrischen Zellengehäusen erstreckt sich das Rohr zumindest teilweise in die Umhüllende benachbarter Zellen, wobei der abgeflachte, quer verlaufende Abschnitt außerhalb der Umhüllenden liegt. Die Umhüllende ist ein theoretisches geometrisches Gebilde, das wie ein straff gespanntes Tuch um das Zellenpaket gewickelt ist.

Das Rohr sollte sich in Längsrichtung der Zellen abwechselnd auf- und abwärts erstrecken, also mehrere längs verlaufende Abschnitte, an denen Lamellen angebracht sein können, bieten.

Da es unterschiedliche Abstände der Batteriezellen vom zugeordneten Rohrabschnitt, an dem die Lamelle der Batteriezelle befestigt ist, gibt, würden die Zellen unterschiedlich stark gekühlt. Weiter vom Rohr entfernt liegende Lamellen sind hier benachteiligt, denn hier ist die Temperaturdifferenz zwischen dem anliegenden Lamellenabschnitt und der Außenseite des Zellengehäuses geringer als bei Batteriezellen, deren Lamellen oder Lamellenabschnitte näher am gekühlten Rohr liegen. Da jedoch für die Lebensdauer der Batterien, wie vorher schon erwähnt, eine geringe Temperaturdifferenz zwischen den Batteriezellen beim Laden und Entladen entscheidend ist, sieht die Erfindung vor, dass weiter von dem oder den zugeordneten Rohren entfernte Batteriezellen über eine größere Anlagefläche die Lamelle oder Lamellen berühren, d.h. eine größere Wärmeübertragungsfläche vorgesehen ist, als bei näher zum zugeordneten Rohr angeordnete Batteriezellen.

Die unterschiedlichen Anlageflächen lassen sich beispielsweise dadurch verwirklichen, dass die Lamelle oder die Lamellenabschnitte für die näher liegende Batteriezelle wenigstens eine Ausnehmung oder Vertiefung besitzen, wodurch die Anlagefläche verringert wird.

Eine besondere Problematik ergibt sich bei der Verwendung von sog. zeotropen Kühlmitteln. Das sind Gemische von unterschiedlichen Flüssigkeiten mit unterschiedlichen Sättigungstemperaturen. Während des Siedens oder Verdampfens ändert sich die Zusammensetzung der Flüssigkeit, so daß sich die Gesamtsättigungstemperatur der verbleibenden Flüssigkeit verändert.

Die vorliegende Erfindung sieht auch Möglichkeiten vor, zeotrope Kühlmittel zur Kühlung von Antriebsbatterien einzusetzen. Zuvor wurde ja bereits erläutert, daß alle Batteriezellen möglichst auf gleiche Temperatur gehalten werden müssen. Der Einsatz eines zeotropen Kühlmittels steht diesem Ziel entgegen, da das Kühlmittel auf dem Weg durch die Batteriebaugruppe seine Sättigungstemperatur verändert und damit eine zunehmend schlechtere Kühlwirkung hätte.

Die Erfindung sieht hierzu eine Antriebsbatteriebaugruppe vor, mit mehreren nach außen durch jeweils eigene Zellengehäuse geschlossenen, zu einem Zellenpaket zusammengefaßten Batteriezellen und wenigstens einem ein zeotropes Kühlmittel führenden Rohr zum Abtransport von Wärmeenergie der Batteriezellen. Der innerhalb der Batteriebaugruppe liegende Rohrabschnitt ist so ausgebildet, daß das Kühlmittel einem solchen Druckabfall unterliegt, daß die Sättigungstemperatur des Kühlmittels im Rohrabschnitt im wesentlichen konstant bleibt. Die Erfindung kompensiert die an und für sich auftretende Änderung der Sättigungstemperatur durch einen gezielten Druckabfall innerhalb des Rohrabschnittes.

Leichte Temperaturschwankungen um ±1 K sind dabei tolerierbar und im Bereich der Fertigungsschwankungen.

Der im Rohrabschnitt vorgesehene Druckabfall liegt gemäß der bevorzugten Ausführungsform zwischen 0,25 bis 0,75 bar.

Möglichkeiten, den Druckabfall zu erzielen, sind zum Beispiel eine Verengung, insbesondere kontinuierliche Verengung des Rohrquerschnitts zum Auslaß hin mittels z.B. einer Durchmesserverringerung oder einer Abflachung des Rohrs. Bei einer Serienschaltung von Rohrabschnitten kann auch durch die Anzahl der Rohrabschnitte ein Druckabfall verwirklicht werden.

Eine andere Lösung, eine gleichmäßige Kühlwirkung der Batteriezellen zu erreichen und/oder den Einsatz von zeotropen Kühlmitteln zu ermöglichen, sieht mehrere, insbesondere zeotrope Kühlmittel führende Rohrabschnitte vor, die innerhalb der Batterie in unmittelbarem thermischen Kontakt stehen und gegenläufig durchströmt werden. Durch dieses gegenläufige Durchströmen mitteln sich die in den Rohrabschnitten vorliegenden Temperaturen, so daß insgesamt eine gleichmäßige Kühlwirkung erzielt wird.

Die Rohrabschnitte sollten vorzugsweise innerhalb der Batterie parallel zueinander verlaufen und möglichst nahe aneinander angeordnet sein.

Eine besonders gute Kompensation der Temperaturen ergibt sich dann, wenn eine oder mehrere Lamellen von beiden Rohrabschnitten gemeinsam ausgehen, da sich sozusagen in der Lamelle selbst die Temperatur vergleichmäßigt.

Eine weitere Möglichkeit, die Batteriezellen auf möglichst gleiche Temperaturen zu bringen, besteht darin, daß sie, vorzugsweise sogar alle Batteriezellen, von einer ersten und einer zweiten Lamelle erfaßt werden, die vor bzw. hinter einem Strömungsumkehrpunkt liegen. Der Strömungsumkehrpunkt ist sozusagen der strömungsmäßig am weitesten von Einlaß und Auslaß entfernte Punkt. Insbesondere erfassen die Lamellen jede Zelle auf entgegengesetzten Seiten des Umfangs.

Besonders bevorzugt ist jeder Batteriezellenreihe zur Kühlung je ein Rohr zugeordnet. Damit kann einerseits eine geeignet gute Kühlwirkung erzielt werden und andererseits ist sehr einfach ein modularer Aufbau möglich. Wenn nämlich eine Batterie höherer Kapazität nötig ist, kann einfach eine Batteriezellenreihe mit zugeordnetem Rohr ergänzt werden.

Das Rohr läßt sich in Fluidströmungsrichtung in zwei hintereinanderliegende Rohrabschnitte oder Rohrhälften unterteilen, wobei jede Batteriezelle einer Reihe mit jedem Rohrabschnitt über eine Lamelle thermisch gekoppelt ist, so daß jede Batteriezelle mit beiden Rohrabschnitten thermisch gekoppelt ist.

Der erste Rohrabschnitt sollte, zur gleichmäßigen Kühlung, in Fluidströmungsrichtung nacheinander mit Batteriezellen thermisch gekoppelt sein Der zweite Rohrabschnitt wird in Fluidströmungsrichtung, beginnend von der zuletzt bis zu der zuerst mit dem ersten Rohrabschnitt gekoppelten Batteriezelle, thermisch gekoppelt, d.h. die zugehörige Lamelle liegt an den entsprechenden Batteriezellen an. Die in der ersten Rohrhälfte zuerst und damit am stärksten gekühlte Batteriezelle wird in der zweiten Rohrhälfte zuletzt und damit im Durchschnitt genauso gut gekühlt wie eine Batteriezelle, welche sozusagen am Umkehrpunkt liegt.

Eine kompakte Bauform ergibt sich auch dadurch, daß eine Lamelle (vorzugsweise jede Lamelle) zumindest zwei benachbarte Batteriezellen kontaktiert und sich V-förmig in den Zwischenraum zwischen diesen erstreckt. Durch das "V" ergibt sich auch eine Flexibilität der Lamelle, über die Lagetoleranzen aufgefangen werden.

Wenn die Lamelle im Scheitelpunkt des "V" um das Rohr gelegt ist, lassen sich die Kompaktheit und die Anlagefläche Lamelle zu Rohr leicht verbessern.

Der Rohrverlauf ist gemäß einer Ausführungsform zinnenförmig. Das Rohr verläuft zuerst "aufwärts" im Zwischen- oder Hohlraum zwischen zwei Batteriezellen, dann (angeschmiegt an den Batteriezellenumfang) in einem Kreissegmentbogen am Batteriezellenumfang entlang näher zum nächsten Zwischen- oder Hohlraum und zwischen benachbarten Batteriezellen und von hier wieder "abwärts" usw. Dieser Rohrverlauf sorgt für einen extrem kurzen Wärmetransport und erhöht Kompaktheit und Kühlleistung.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Seitenansicht eines Abschnitts einer erfindungsgemäßen Antriebsbatteriebaugruppe,
- Figur 2 eine vergrößerte Ansicht des Bodenbereichs des Außengehäuses der Baugruppe nach Figur 1,
- Figur 3 eine vergrößerte Ansicht einer etwas modifizierten Baugruppe im Bodenbereich,
- Figur 4 eine schematische Draufsicht auf die erfindungsgemäße Baugruppe bei abgenommenem Gehäusedeckel,
- Figur 5 eine schematische Draufsicht auf eine erfindungsgemäße Baugruppe gemäß einer weiteren Ausführungsform,
- Figur 6 eine vergrößerte Ansicht des mit X in Figur 5 gekennzeichneten, mit unterbrochenen Linien umrahmten Bereichs,
- Figuren 7 bis 9 verschiedene Detailansichten von Möglichkeiten, die Lamellen im Gehäuse zu positionieren,
- Figur 10 eine schematische Draufsicht auf ein bei der Erfindung eingesetztes Zellenpaket mit integrierter Kühlleitung,
- Figur 11 eine schematische Draufsicht auf ein bei der Erfindung eingesetztes, weiteres Batteriezellenpaket mit integrierter Kühleinrichtung,
- Figuren 12 bis 16 weitere Varianten von Batteriezellenpaketen in Draufsicht it integrierter Kühleinrichtung,
- Figur 17 eine vergrößerte Detailansicht einer Variante zur Koppelung von Lamellen mit dem zugeordneten, Kühlfluid führenden Rohr,
- Figuren 18 und 19 vergrößerte Detailansichten zweier aufeinanderfolgender Herstellungsschritte zur Schaffung einer weiteren Variante der Koppelung von Lamellen mit dem zugeordneten Rohr.
- Figur 20 eine Detailansicht eines Kühlfluid führenden Rohres mit angebrachten Lamellen,
- Figur 21 eine schematische Seitenansicht einer alternativen Ausführungsform der erfindungsgemäßen Antriebsbatteriebaugruppe,
- Figur 22 eine Draufsicht auf die Batteriebaugruppe von Figur 21 bei abgenommenem Deckel,
- Figur 23 eine schematische Draufsicht auf eine Kühleinrichtung, die bei der erfindungsgemäßen Baugruppe eingesetzt wird,
- Figuren 24 bis 26 vergrößerte Ansichten im Bereich der Kontaktierung der Lamellen mit den Batteriezellen gemäß verschiedener Ausführungsformen,
- Figur 27 eine Draufsicht auf eine von einer Lamelle umschlossene Batteriezelle gemäß einer weiteren Variante,
- Figur 28 eine schematische Seitenansicht einer Anlage zur Herstellung eines beschichteten Bleches, aus dem bei der erfindungsgemäßen Baugruppe eingesetzte Lamellen hergestellt werden,
- Figur 29 eine Draufsicht auf die Anlage nach Figur 28,
- Figur 30 eine schematische Ansicht eines ein zeotropes Kühlmittel führenden Rohres im Bereich der Baugruppe, wobei die Lamellen zur Vereinfachung weggelassen sind,
- Figur 31 eine Schnittansicht durch die Baugruppe längs des Schnittes A-A in Figur 30,
- Figur 32 eine Schnittansicht durch die Baugruppe längs des Schnittes B-B in Figur 30,
- Figur 33 eine schematische Ansicht eines ein zeotropes Kühlmittel führenden Rohres im Bereich der Batteriebaugruppe gemäß einer weiteren Erfindungsvariante, wobei die Lamellen zur Vereinfachung weggelassen sind,
- Figur 34 eine Querschnittsansicht durch die Baugruppe im Bereich des Rohres längs der Schnittlinie C-C in Figur 33,
- Figur 35 eine perspektivische Ansicht auf eine Batteriezellenpaket einer Baugruppe gemäß einer weiteren Ausführungsform,
- Figur 36 eine Draufsicht auf das Batteriezellenpaket nach Fig. 35,
- Figur 37 eine Schnittansicht durch das Batteriezellenpaket nach Fig. 35,
- Figur 38 eine vergrößerte Detailansicht einer geringfügig modifizierten Verbindung Lamelle zu Rohr, angelehnt an die in Fig. 37,
- Figur 39 eine Seitenansicht des Batteriezellenpakets nach Fig. 35, und
- Figur 40 eine Seitenansicht auf die erfindungsgemäße

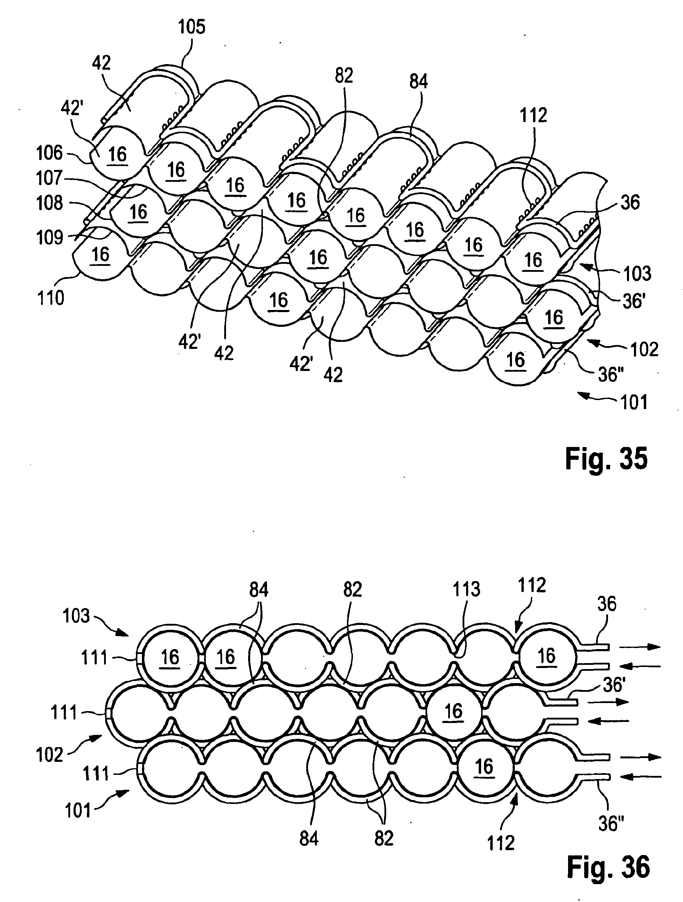

Baugruppe mit dem Batteriezellenpaket nach Fig. 35.

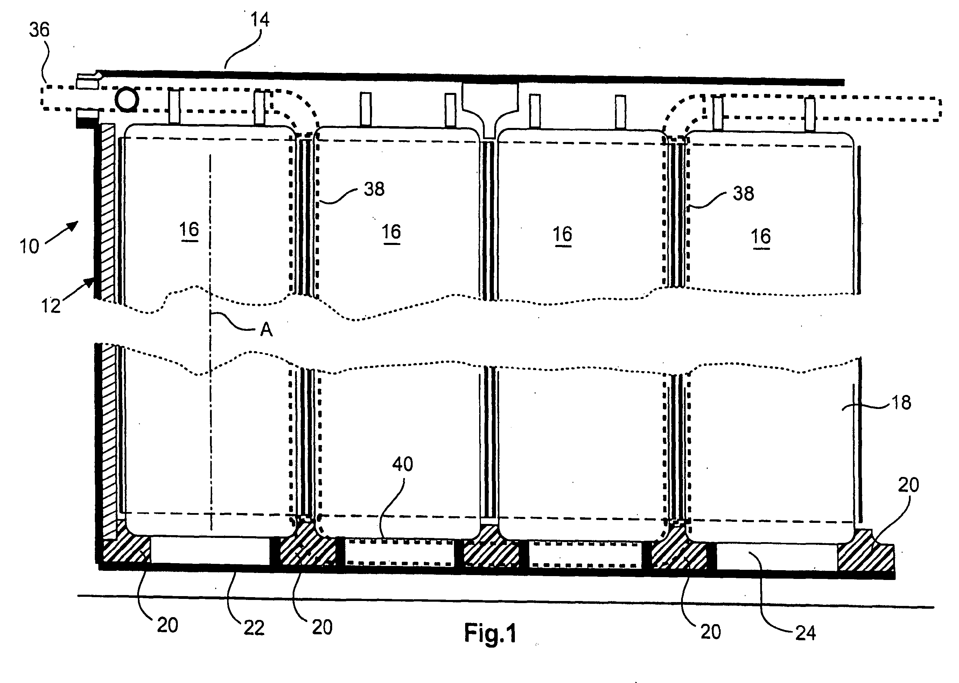

In Figur 1 ist eine Antriebsbatteriebaugruppe eines Elektro-, Brennstoffszellen- oder Hybridfahrzeugs gezeigt, das mit einer aktiven Kühlung versehen ist. Das Außengehäuse 10 besteht aus einem einseitige offenen, behälterförmigen Grundkörper 12 und einem den Grundkörper 12 schließenden Deckel, die beide aus Kunststoff (PP, PA, PPS oder PPA) durch Spritzgießen gefertigt sind. Im Außengehäuse 10 sind zahlreiche Batteriezellen 16 untergebracht und in Reihe geschaltet, so daß eine Hochvolt-Batterie, genauer ein Hochvolt-Akku, geschaffen wird. Die einzelnen Batteriezellen 16 sind NiMH oder Li-lonen Batterien und in sich geschlossene Einheiten, die nach außen durch ein eigenes Zellengehäuse 18 abgeschlossen sind. Die Batteriezellen 16 werden entweder vor der Montage in das Außengehäuse 10 zu einem Paket zusammengefaßt oder erst durch das Einsetzen in das Außengehäuse 10 zum Paket.

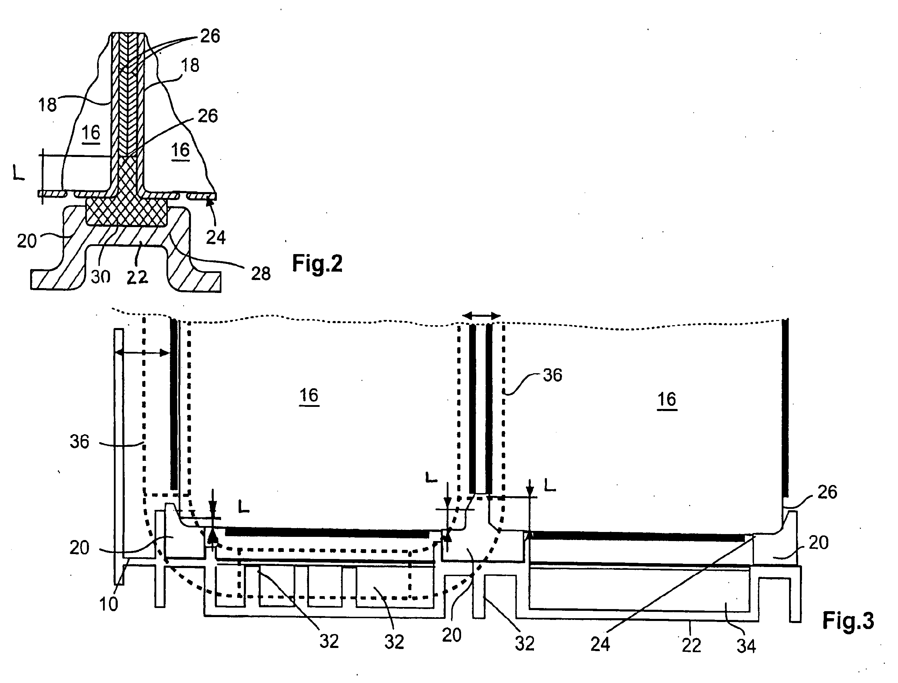

Die Batteriezellen 16 werden im Außengehäuse 10 dadurch positioniert, daß das Außengehäuse 10 innenseitig Positioniervorsprünge 20 einstückig angeformt hat, die vorzugsweise beim Spritzgießen hergestellt werden. Die Zellen 16 haben eine zylindrische, insbesondere kreiszylindrische Außengeometrie, wobei die Positioniervorsprünge 20 in Zwischenräume zwischen benachbarten Batteriezellen 16 ragen, wie in den Figuren 1 bis 3 zu sehen ist. Über die Positioniervorsprünge, die vorzugsweise hauptsächlich am Boden 22 und am Deckel 14 angeformt sind, werden die Batteriezellen 16 in allen Richtungen, in Richtung der Längsachse A der Batteriezellen 16 und in radialer Richtung exakt positioniert. Hierzu greifen die Positioniervorsprünge 20 an den Stirnseiten 24 der Batteriezellen 16 und an den axialen Rändern der Umfangsseiten 26 an. Die Angriffsfläche ist insgesamt sehr gering, in Längsrichtung erstrecken sich die Positioniervorsprünge 20 gerade einmal über 2 bis 20 % der Gesamtlänge der zugeordneten Batteriezelle 16 seitliche von dieser. Die entsprechende Länge L in Axialrichtung ist in den Figuren 2 und 3 dargestellt.

Die Batteriezellen 16 haben eine nicht zu vernachlässigende Toleranz bezüglich des Zellengehäuses 18. Um sicherzustellen, daß die Batteriezellen 16 lagefest und ohne Spiel im Außengehäuse 10 befestigt sind, haben die Positioniervorsprünge 20 Abschnitte unterschiedlicher Elastizität. Dies ist beispielsweise in Figur 2 gezeigt. Ein erste Abschnitt 28 ragt bis unter die Stirnseite 24 und besteht aus demselben wie der von außen sichtbare Teil des Außengehäuses 10. Dieser erste Abschnitt 28 ist relativ hart und stabil und hat eine Aufnahme für einen in Querschnitt T-förmigen zweiten Abschnitt 30 aus einem gummiartigen Kunststoff geringer Elastizität, der dann an den Stirnseiten 24 und den Umfangsseiten 26 der Zellengehäuse 18 anliegt. Dadurch, daß der zweite Abschnitt 30 sehr weich ist, führt er zu einer vorgespannten, Toleranzen ausgleichenden Lagerung der Batteriezellen 16. Die Herstellung des Außengehäuses 10 mit den Abschnitten 28, 30 unterschiedlicher Härte bzw. unterschiedlicher Elastizität erfolgt durch das sog. 2-Komponenten-Spritzgußverfahren. Zum leichteren Einstecken der Batteriezellen 16 in einzelne oder Einführen zwischen mehrere Positioniervorsprüngen 20 weisen letztere Einführschrägen auf, die in Figur 3 gut zu erkennen sind.

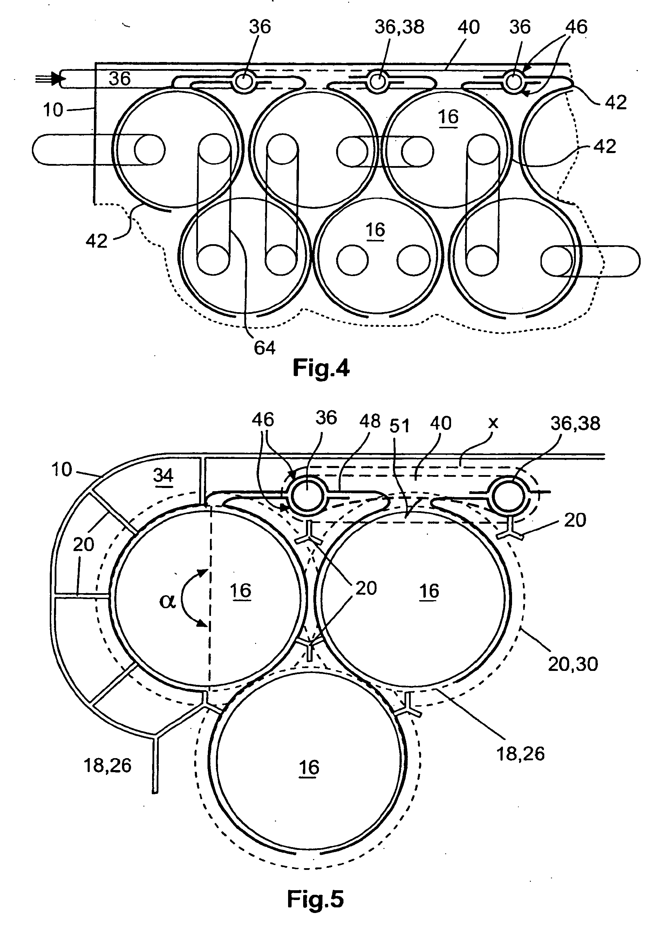

In Figur 5 ist dargestellt, daß die Positioniervorsprünge 20 teilweise die Batteriezellen 16 an den Umfangsrändern komplett umgeben. Zumindest jedoch sollte eine drei-Punkt-Lagerung an den Umfängen zur seitlichen Sicherung vorgesehen sein. Der weichere, zweite Abschnitt 30 verläuft bei der Variante in Figur 5 geschlossen um die benachbarten Batteriezellen 16 herum. Weitere Positioniervorsprünge 20 in Form von Rippen oder sternförmigen Leisten halten die Batteriezellen 16 seitlich von außen. Insbesondere werden die äußeren Batteriezellen an rippenförmigen Positioniervorsprüngen 20 anliegen. Sternförmige Positioniervorsprünge ragen in die Zwischenräume zwischen benachbarten Batteriezellen, so daß ein Positioniervorsprung 20 zur Halterung mehrere Batteriezellen 16 beiträgt. Diese in Figur 5 dargestellten Positioniervorsprünge in Rippen- oder Sternform erstrecken sich zum Teil über den axialen Rand der Umfangsseiten 26 hinaus bis in die mittleren Abschnitte der Umfangsseiten 26 oder sogar vom Boden 22 aus bis nahe zum Deckel 14 oder, umgekehrt, vom Boden des Deckels 14 bis nahe zum Grundkörper 12. Bei übergroßen Batteriezellen 16 verformen sich die Positionierabschnitte 20 und gegebenenfalls auch die Zellengehäuse 18.

In Figur 3 ist auch zu erkennen, daß Rippen 32 im Bereich des Bodens 22 angeformt sind, die die Stabilität des Außengehäuses 10 erhöhen sollen. Zwischen den Rippen 22, oder ganz allgemein, in bestimmten Abschnitten des Außengehäuses 10 kann eine thermische Isolationsschicht 34 angebracht sein, beispielsweise durch 2-Komponenten-Spritzgießen oder durch Schäumen.

Wie bereits zuvor erwähnt, ist die erfindungsgemäße Batteriebaugruppe mit einer aktiven Kühleinrichtung, genauer einem Kühlkreislauf, versehen. Die Kühleinrichtung besteht aus einem oder mehreren Kühlfluid führenden Rohren 36, die sich durch das Außengehäuse 10 erstrecken und außerhalb des Außengehäuses 10 beispielsweise an einen Kühlmittel- oder Kältemittelkreislauf angeschlossen sind. Das Kühlfluid kann ein Wasser/Glykolgemisch, R 134a, CO₂ oder ein alternatives Kühlmittel sein, welches in entsprechenden Phasenzuständen den Kühlkreislauf durchläuft. Das oder die Rohre 36 laufen nicht geradlinig durch das Außengehäuse 10 hindurch, sondern mäander- oder im weitesten Sinne zinnenförmig. Das bedeutet, daß das Rohr 36 längs der Zellenlängsachse A verlaufende Abschnitte 38 (siehe Figur 1) und quer hierzu verlaufende Abschnitte 40 besitzt. Durch diesen Verlauf soll die innerhalb des Außengehäuses 10 verlaufende Rohrlänge maximiert werden.

Am Rohr 36 sind zahlreiche dünne Lamellen 42 befestigt. Die Lamellen 42, welche eine Wandstärke von lediglich 0,1 bis 2,5 mm, vorzugsweise 0,5 bis 1,5 mm haben und aus Aluminium, Kupfer oder entsprechenden hochwärmeleitfähigen Materialien bestehen, sind abschnittsweise der Außenform der Zellengehäuse 18 angepaßt und liegen flächig und über eine Preßpassung an den Umfangsseiten 26 an, sie schmiegen sich sozusagen an diese an. Bei der Herstellung der Lamellen 42 wird darauf geachtet, daß ihre Lage und Geometrie auf Batteriezellen 16 mit an der Untergrenze liegenden Außenabmaßen abgestimmt ist. Dadurch ist sichergestellt, daß sich die Lamelle 42 immer an die zugehörige Batteriezelle 16 anpassen kann und flächig und vorgespannt an ihr anliegt, wenn die Zelle 16 in den entsprechenden Aufnahmeraum, der durch die Lamelle 42 oder die mehreren Lamellen 42 definiert ist, geschoben wird. An einem Rohr 36 sind zahlreiche Lamellen 42 unmittelbar angebracht, um eine gute Wärmeübertragung zu gewährleisten. Die Art der Anbringung der entsprechenden Lamelle 42 an ihrem Rohrabschnitt erfolgt beispielsweise durch Kleben, Schweißen, Löten oder eine mechanische Befestigung. In den Figuren 4 und 5 ist zu erkenne, daß Lamellen 42 im Bereich des Rohres 36 zu Halbschalen 46 umgeformt sind, die an gegenüberliegenden Seiten des Rohres 36 anliegen und diese wie eine Schelle umschließen. Dadurch lassen sich über einfache Schraub- oder Nietverbindungen 48 die Lamellen 42 gegen das Rohr 36 pressen.

Die Lamellen 42 kontaktieren wenigstens 40 % der Außenumfangsfläche, d.h. der Umfangsseiten 26 des Zellengehäuses 18, so daß der entsprechende Anteil der Umfangsseite 26 des Zellengehäuses 18 von einer oder mehreren Lamellen 42 abgedeckt ist, um über die Lamellen 42 Wärme aus den Batteriezellen 16 in Richtung der Rohre 36 abzutransportieren.

Bei den in den Figuren 4 und 5 dargestellten Ausführungsformen umfassen die einzelnen Lamellen 32 in Richtung Zellenlängsachse A gesehen das Zellengehäuse 18 über mehr als 180° des Umfangs (siehe Winkel α) so daß die Lamellen 32 selbstklemmend am Zellengehäuse 18 angebracht sind. Die zuvor erwähnten Rippen und leistenförmigen Positioniervorsprünge 20 liegen zum Teil ebenfalls an den Lamellen 42 an und stützen diese zusätzlich (siehe Figur 5). Es ist auch in den Figuren gut zu erkennen, daß die Batteriezellen 16 teilweise zwischen mehreren, an entgegengesetzten Außenumfangsabschnitten des Zellengehäuses 18 angreifenden Lamellen 42 geklemmt sind. Die Lamellen 42 erstrecken sich mäanderförmig an den Batteriezellen 16 entlang, um mehrere Batteriezellen 16 zu kontaktieren.

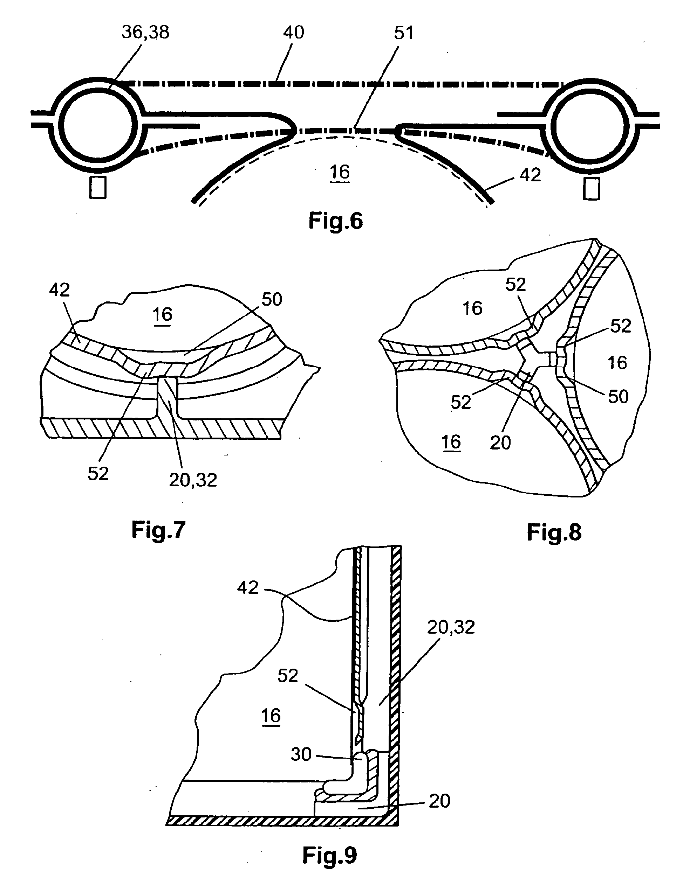

Die Lamellenabschnitte benachbarter Batteriezellen 16 können sich zwar berühren, wie es zwischen den zwei unteren linken Batteriezellen 16 in Figur 4 gezeigt ist, bevorzugt ist jedoch ein geringer Spalt vorgesehen, über den die Toleranzen im Außenumfang der Zellengehäuse 18 aufgefangen werden. Die hier dargestellten Lamellen 42 haben jeweils einen W-förmigen, nach außen ausbauchenden Bereich, der von den Batteriezellen 16 beabstandet ist (siehe Figuren 7 bis 9). Der entsprechende Spalt trägt das Bezugszeichen 50. Der W-förmige Abschnitt bildet einen formschlüssigen Halteabschnitt 52, in dessen außenseitige Vertiefung eine Rippe 32 oder ein Positioniervorsprung 20 hineinragt. Über den Spalt 50 wird die Flexibilität der Lamelle 42 beibehalten.

In Figur 8 ist zu sehen, daß das sternförmige Positionierelement 20 gleich drei benachbarte Lamellenabschnitte über entsprechende Halteabschnitte 52 positioniert.

Die Halteabschnitte 52 müssen sich auch nicht über die gesamte axiale Länge der Lamellen 42 erstrecken, sondern können nur einen kleinen Rand oder Abschnitt der Lamellen 42 positionieren, wie dies anhand des unteren Randes der Lamelle 42 in Figur 9 gezeigt ist.

Die Rohre 36 können vollständig außerhalb des Zellenpakets angeordnet sein oder, falls zwischen den Batteriezellen 16 noch genügend Platz sein sollte, teilweise oder vollständig in den entsprechenden Zwischenräumen verlaufen. Bei der Ausführungsform nach den Figuren 4 bis 6 ragen die längs verlaufenden Rohrabschnitte 38 teilweise in das Zellenpaket hinein, das nach außen hin durch die sogenannte Umhüllende der Zellen definiert ist. In Figur 5 wäre die Umhüllende sozusagen eine Linie, die sich als Tangente an die Außenseiten der äußeren Batteriezellen 16 anlegt, wie ein um das Batteriepaket gespannter Stoff.

Nachdem sich der längs verlaufende Abschnitt 38 teilweise in das Zellenpaket erstreckt und der quer verlaufende Abschnitt 40 nicht unterhalb der unteren Stirnseite 24 oder oberhalb der oberen Stirnseite 24 der Batteriezellen 16 verlaufen soll, sondern seitlich an dieser vorbei, ist das ansonsten kreiszylindrisch im Querschnitt ausgeführte Rohr 36 im quer verlaufenden Abschnitt 40 einseitig auf der der entsprechenden Zelle 16 zugewandten Seite abgeflacht. Der abgeflachte oder eingedrückte Abschnitt trägt das Bezugszeichen 51. Der quer verlaufende Abschnitt 40 liegt somit außerhalb der Umhüllenden, bleibt von den Batteriezellen 16 beabstandet und baut seitlich sehr klein auf. Damit wird der durch die teilweise in das Paket hineinragenden Abschnitte 38 gewonnene Bauraum auch im quer verlaufenden Abschnitt 40 nicht vergrößert.

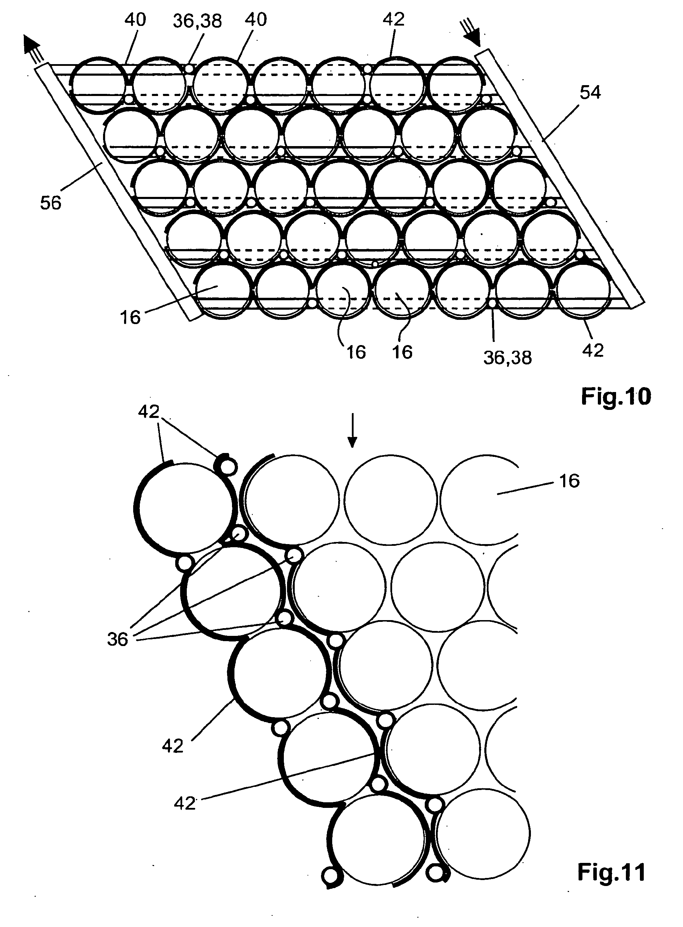

Die Figuren 10 und 11 zeigen, daß Rohre 36 oder Rohrabschnitte auch vollständig innerhalb des Zellenpakets verlaufen können. Die durchgehenden Abschnitte der jeweiligen Rohre 36 sollen verdeutlichen, daß es sich um einen oberhalb der oberen Stirnseite 24 verlaufenden Abschnitt 40 handeln soll, wogegen die mit unterbrochenen Linien dargestellten Abschnitte 40 einen unterhalb der unteren Stirnseite 24 verlaufenden Abschnitt 40 symbolisieren. Die Rohre 36 selbst verlaufen z.B. parallel und beginnen bei einem Einlaßkollektor 54 und enden bei einem Auslaßkollektor 56. Die an den Rohren 36, genauer gesagt an den längs verlaufenden Abschnitten 38, angebrachten Lamellen 42 sind mit dickeren Linien dargestellt. In den Figuren 10 und 11 sind die Lamellen 42 wellenförmig und erfassen eine Reihe von Batteriezellen 16 entweder auf ihrer Außen- oder auf ihrer Innenseite. Die Batteriezellen 16 werden somit von gegenüberliegenden Seiten aus gegriffen und insgesamt großflächig von den Lamellen 42 kontaktiert.

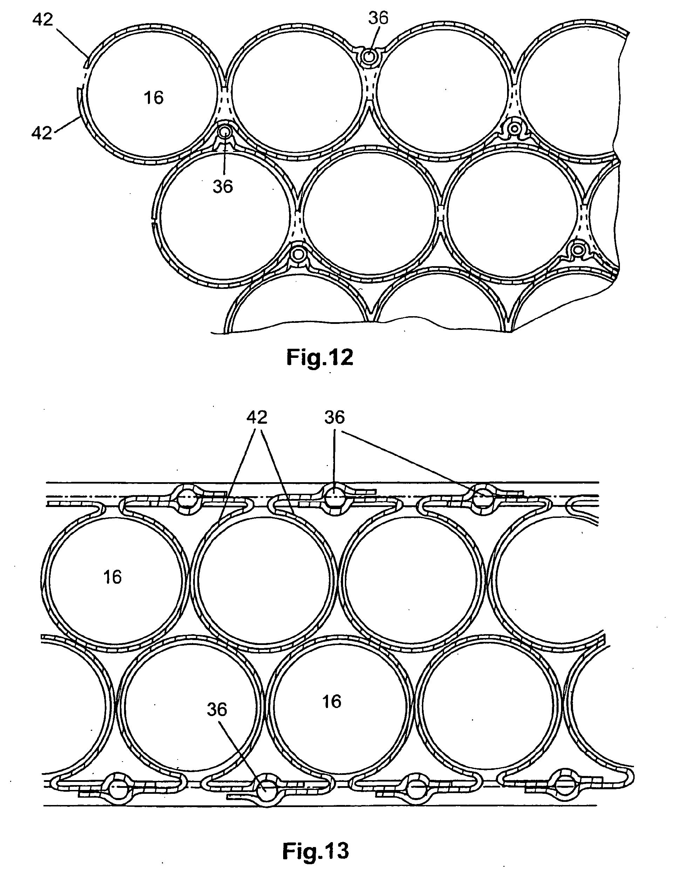

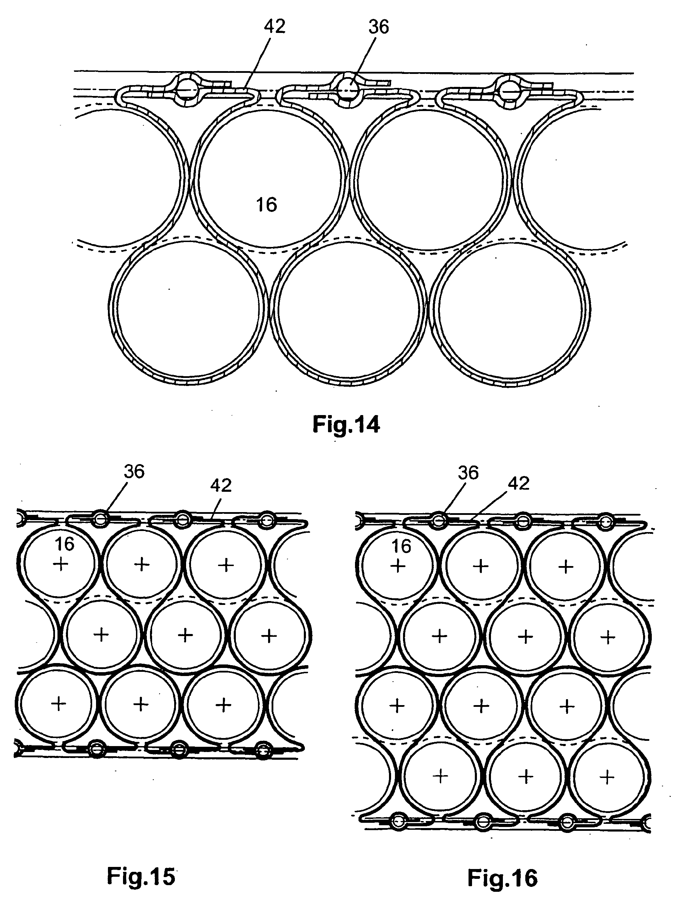

Die Figuren 12 bis 16 offenbaren unterschiedliche Ausbildungen der Lamellen 42 sowie unterschiedlich dicke Zellenpakete. Die Figuren 12 und 15 zeigen beispielsweise ein dreireihiges Zellenpaket mit zueinander versetzten Reihen, die Figuren 13 und 14 ein zweireihiges Zellenpaket mit einem außenseitigen Rohr gemäß Figur 14 und zwei außenseitigen Rohren gemäß Figur 13, und Figur 16 schließlich ein vierreihiges Zellenpaket.

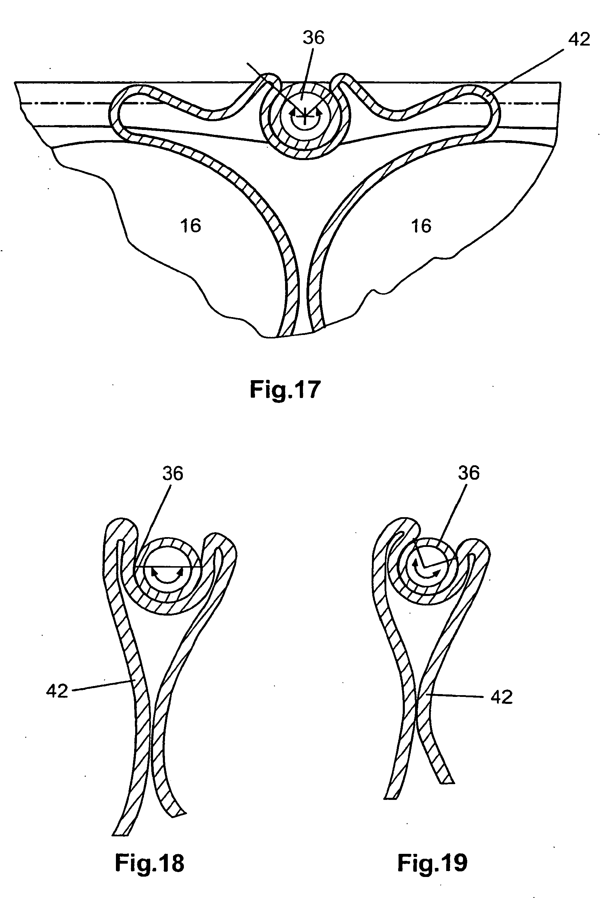

In den Figuren 17 bis 19 sind verschiedene Ausführungsformen dargestellt, wie die Lamellen 42 im Bereich der Anbindung an das Rohr 36 ausgeführt sein können.

Gemäß Figur 17 ist eine Lamelle 42 in ihrem Mittelabschnitt im wesentlichen Q-förmig umgeformt und umschließt das Rohr 36 um, in Längsrichtung gesehen, fast 270°. Es ist ein Preßsitz zwischen Lamelle 42 und Rohr 36 ausgebildet, der auch für eine gute Positionierung der Lamelle 42 am Rohr 36 sorgt. Die Lamelle 42 kann vor ihrem Aufclipsen auf das Rohr bereits entsprechend geformt sein oder um das Rohr 36 entsprechend gecrimpt werden.

Die Figur 18 zeigt eine Rohraufnahmenut im Mittelabschnitt der Lamelle 42 beim Einführen des Rohres 36.

Um einen Preßkontakt zwischen dem Rohr 36 und der Lamelle 42 zu erreichen, werden dann in einem zweiten Arbeitsschritt die seitlichen Lappen der Rohraufnahmenut zueinander nach innen gepreßt, so daß das Rohr 36 formschlüssig über fast 270° gehalten wird. Zusätzlich zur Preßpassung kann natürlich auch ein Verlöten oder Kleben angedacht sein, wobei in den Klebstoff vorzugsweise wärmeleitende Partikel wie Aluminium im Klebstoff integriert sein sollten.

Die Rohre 36 sind Metallrohre mit einer guten Wärmeleitfähigkeit von mehr als 180W/m/K und besitzen üblicherweise einen Außendurchmesser von 4 bis 10 mm, wobei die Wandstärke 0,3 bis 2 mm, abhängig vom Kühlfluid, beträgt. Die Wandstärke der Rohre 36 liegt bei einem Wasser-/Glycol-Gemisch und bei R134a etwa 0,3 bis 1 mm, bei CO₂ 1 bis 2 mm. Die Innendurchmesser der Rohre betragen für das Wasser-/Glycol-Gemisch und R134a 3 bis 6 mm, bei CO₂ 1,5 bis 4 mm. Ein Rohr 36 versorgt etwa 1 bis 10 Batteriezellen 16, und eine Lamelle ist in etwa 1 bis 3 Batteriezellen 16 zugeordnet und berührt diese.

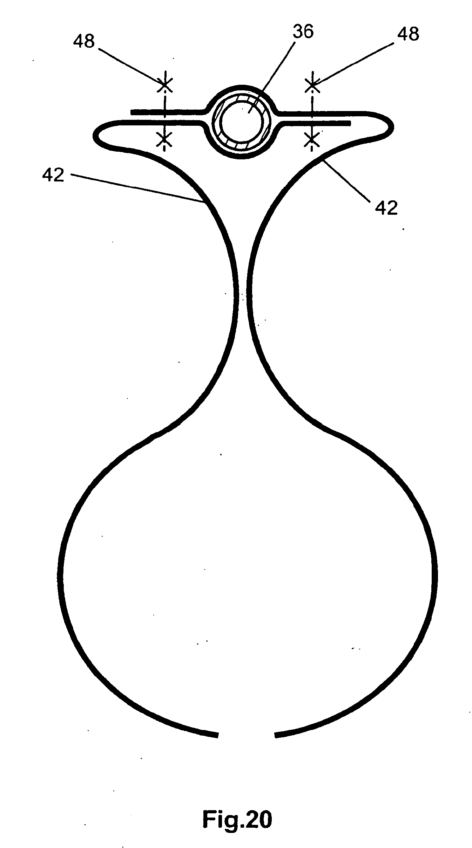

In Figur 20 ist die bereits in Figur 4 dargestellte Anbringung von zwei Lamellen 42 an einem Rohrabschnitt mittels einer mechanischen Befestigung 48 noch einmal größer dargestellt.

Insgesamt erlaubt die Ausführung der Kühleinrichtung einen modularen Aufbau für unterschiedlich große Batteriebaugruppen.

Auch die Positionierung der Rohre 36 selbst kann sehr einfach über entsprechende Positioniervorsprünge 20 im Außengehäuse 10 erfolgen. Dies ist beispielsweise anhand des in Figur 5 dargestellten rechten Rohrabschnitts 36 leicht nachvollziehbar, der zwischen einem Positioniervorsprung 20 und der Isolationsschicht 34 gehaltert sitzt.

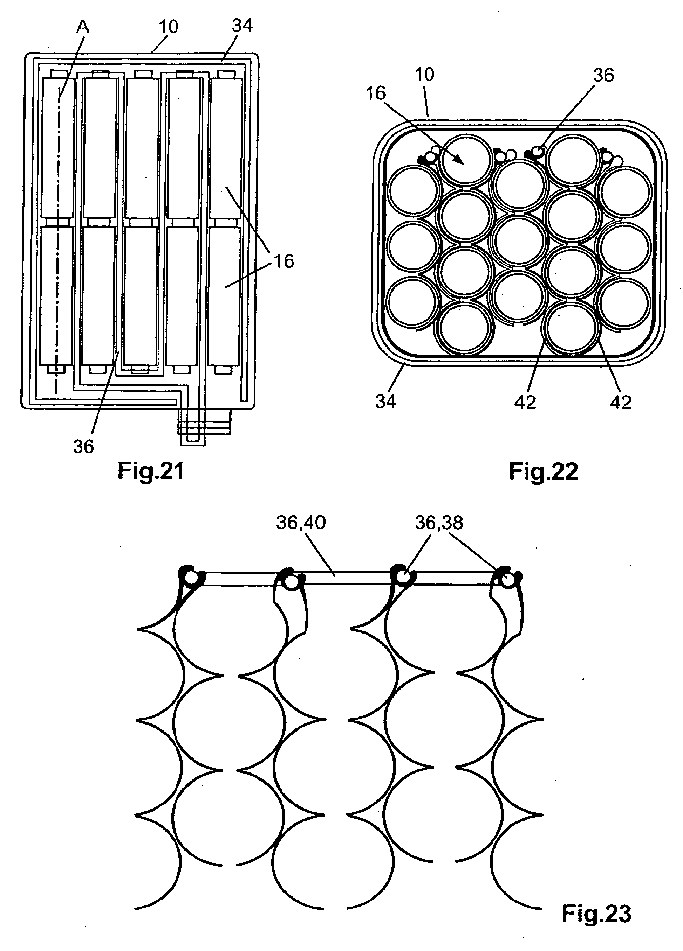

Bei der Ausführungsform nach Figur 21 sind die Batteriezellen 16 nicht nur nebeneinander angeordnet und über Kontaktleitungen 64 wie in Figur 4 dargestellt, in Serie geschaltet, sondern es sind zwei übereinanderstehende Pakete von Batteriezellen zu einem Gesamtpaket zusammengefaßt. Die Längsachsen A der Batteriezellen 16 fluchten hier, so daß es gemeinsame, miteinander fluchtende Zwischenräume zwischen den Batteriezellen 16 gibt, die Platz für die Rohre 36 und die Lamellen 32 bieten (siehe auch Figur 22).

In Figur 23 ist eine Kühleinrichtung, wie sie beispielsweise komplett vormontiert sein kann, dargestellt. Die längs verlaufenden Abschnitte 38 tragen hier beispielsweise jeweils zwei Lamellen 42, die an dem entsprechenden Abschnitt 38 befestigt sind und die jeweils an einer Seite einer Dreierreihe von angrenzenden Batteriezellen 16 anliegen.

Die Montage der Baugruppe wird im folgenden erläutert. Zuerst werden die Batteriezellen 16 einzeln oder gruppenweise automatisch in den Grundkörper 12 gestellt und zwischen Positioniervorsprünge 20 und Rippen 32 positioniert. Parallel hierzu wird die Kühleinrichtung montiert, und zwar in einem separaten Montagewerkzeug, wobei zuvor die Lamellen 42 an den bereits gebogenen Rohren 36 befestigt werden. In dem Montagewerkzeug werden die Lamellen um sog. Dummies, die die Batteriezellen 16 simulieren, herumgebogen, wobei die Dummies entsprechendes Untermaß besitzen, um die spätere Preßpassung der Lamellen 42 sicherzustellen. Die Lamellen können dabei in einem vorgeschalteten Roll- oder Stanzwerkzeug komplett vorgeformt sein, so daß sie in dem Montagewerkzeug nur entsprechend der Batterie-Rasterteilung gehalten werden, oder die Umformung der Lamellen erfolgt teilweise oder ganz in dem Montagewerkzeug. An den Dummies sind sich nach unten konisch aufweitende Schürzen vorgesehen. Diese Schürzen nehmen das obere Ende der Batteriezellen auf, wenn sie von oben auf das vormontierte Paket aus Grundkörper 12 und Batteriezellen 16 aufgesetzt werden und zentrieren die Batteriezellen 16 exakt. Da die Schürzen breiter als die Batteriezellen 16 sind, läßt sich unabhängig von der Toleranz der Zellengehäuse 18 die gesamte Kühleinrichtung mit den geformten Lamellen 32 nach unten in den Grundkörper 12 einschieben und dabei die Lamellen 42 auf die Zellen 16 stecken.

Damit sichergestellt wird, daß die einzelnen Batteriezellen 16 beim Laden und Entladen alle in etwa gleiche Temperatur haben und gleichmäßig gekühlt werden, werden die Batteriezellen 16 abhängig von ihrer Entfernung zum zugeordneten Rohr 36 in unterschiedlichem Ausmaß von dem zugeordneten oder der zugeordneten Lamelle 42 kontaktiert. Die näher am Rohr 36 angeordneten Zellen 16 haben den Vorteil, daß der anliegende Lamellenabschnitt aufgrund der Nähe zum Rohr 36 kühler ist als die vom Rohr 36 entfernteren Lamellenabschnitte. Über unterschiedlich große Kontaktflächen soll ein gleichmäßiger Kühleffekt für alle Batteriezellen 16 erreicht werden, so daß deren Temperaturen nur im Bereich von ± 2 bis 3 K schwanken.

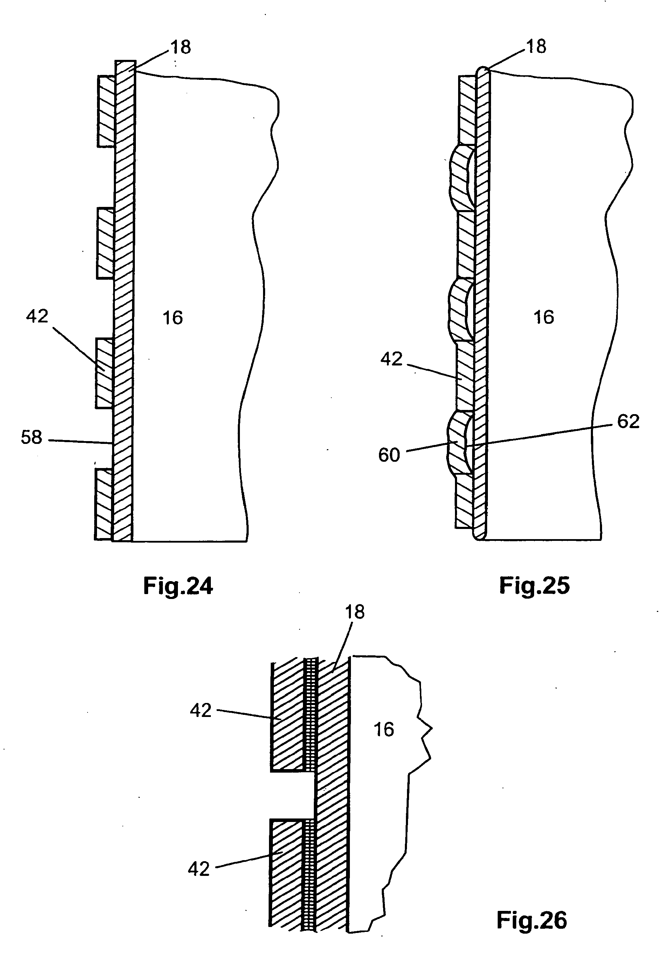

Über Ausnehmungen 58 in denjenigen Lamellenabschnitten, die näher am Rohr 36 liegen (Figur 24), über Vertiefungen 60 zur Bildung eines Luftspalts 62, welcher größer als 0,1 mm, vorzugsweise größer als 0,5 mm sein sollte oder über voneinander beabstandete Lamellen 42 (siehe Figur 26) lassen sich die unterschiedlichen Anlage- und damit Wärmeübertragungsflächen leicht und einfach realisieren.

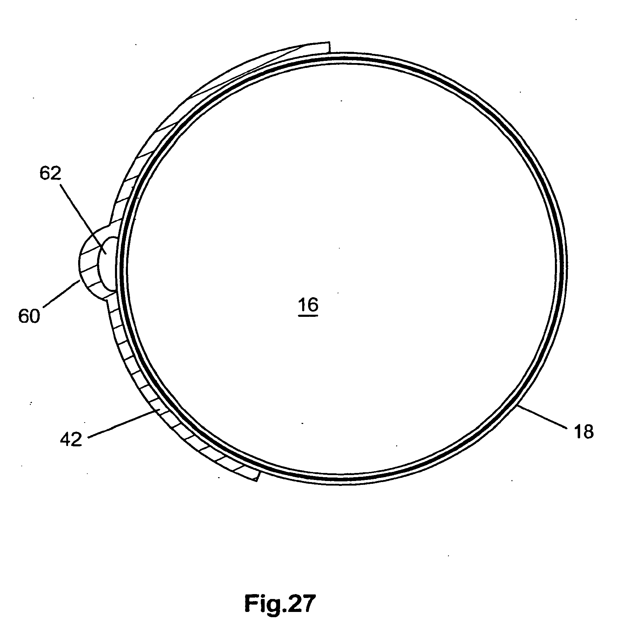

In Figur 27 ist gezeigt, daß die Vertiefung 60 auch längs der Batterielängsachse und nicht nur längs des Batterieumfangs, wie in Figur 25 gezeigt, verlaufen kann. Die Vertiefung 60 kann auch nur lokal ausgeführt sein und muß nicht über den gesamten Umfang gehen.

Normalerweise sind sämtliche Batteriezellen 16, die als fertige, vormontierte Einheit zu einem Batteriepaket zusammengefaßt werden, von Hause aus mit einer isolierenden Kunststoffhülle umgeben. Diese Kunststoffhülle wird durch Shrinken am metallenen Außengehäuse befestigt. Dieser Schritt kostet natürlich Zeit und führt zu einer Verteuerung der Batteriezellen.

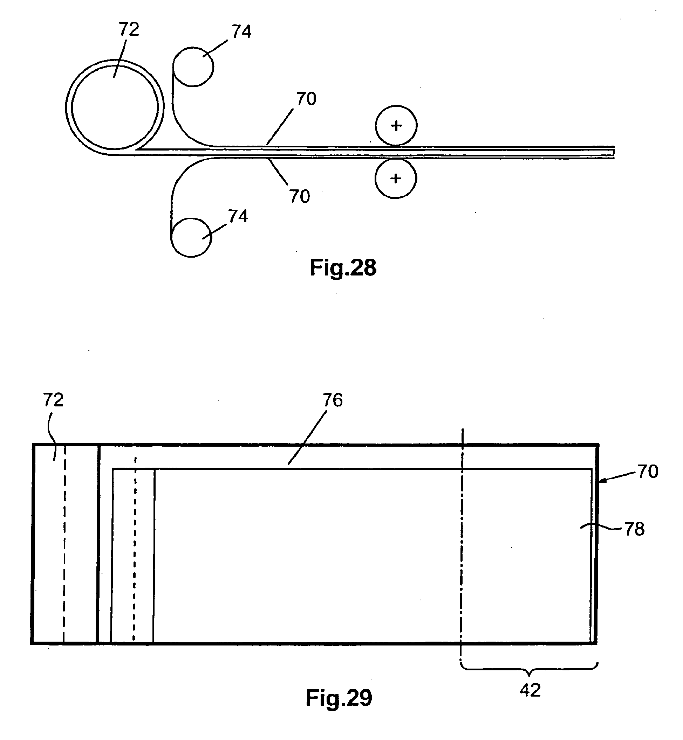

In den Figuren 28 und 29 ist ein Verfahren dargestellt, das die Kosten für die einzelnen Batteriezellen 16 bei einer erfindungsgemäßen Baugruppe verringert.

Die Batteriezellen 16 werden nämlich vorzugsweise nur mit einem metallenen Außengehäuse 18 verbaut und haben keine Isolierhülle aus Kunststoff. Die elektrische Isolierung der Batteriezellen zueinander erfolgt durch die Lamellen 42, die in dem Kontaktbereich mit dem metallenen Zellengehäuse 18 mit einer Isolierschicht, auch Isolation 70 genannt, überzogen sind.

Vorzugsweise hat die Lamelle 42 auf beiden Seiten eine Isolierschicht 70, wobei natürlich auch gegebenenfalls eine einseitige Isolierschicht 70 ausreichend sein kann.

Für die Herstellung des Blechs, aus dem Lamellen 42 herausgeschnitten werden, wird das nach der Herstellung aufgerollte Blechcoil 72 abgewickelt. Bei der Abwicklung werden gleichzeitig auf Rollen 74 aufgerollte Kunststoffolien abgewickelt und partiell ein- oder beidseits auf das Blech gewalzt. Es entsteht eine kaschierte Sandwich-Konstruktion. Die Rollen 74 haben aber nicht die Breite des Blechs, so daß ein nicht isolierter Streifen 76 verbleibt. Die einzelnen Lamellen 42 werden von dem entstehenden Sandwich-Streifen quer zur Abwickelrichtung (siehe strichpunktierte Linie in Figur 29) abgetrennt. Am nicht isolierte Streifen 76 werden die entstehenden Lamellen dann am Rohr 36 befestigt, wogegen der isolierte Abschnitt 78 der Kontaktierung der Batteriezellen 16 und deren Isolierung dient.

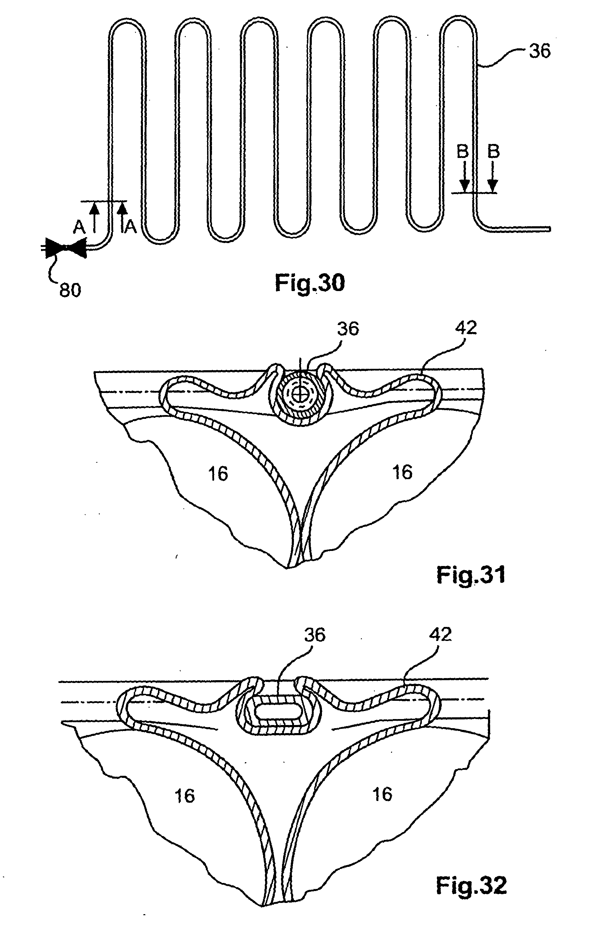

In Figur 30 ist ein mäanderförmiger Abschnitt des Rohres 36 gezeigt, der innerhalb der Batteriebaugruppe angeordnet ist und der ein zeotropes Kühlmittel führt. Im Bereich des Einlasses des Rohres 36 in die Batteriebaugruppe ist ein thermostatisches Expansionsventil 80 angeordnet. Das Rohr 36 ist nahe des Einlasses (siehe Schnitt A-A) in die Antriebsbaugruppe mit einem größeren Querschnitt versehen als im Bereich des Auslasses (siehe Schnitt B-B). Der Durchmesserunterschied ist so gewählt, daß ein Druckabfall im Kühlmittel im Bereich des gezeigten Rohrabschnittes auftritt. Dieser Druckabfall ist so groß, daß die Sättigungstemperatur des Kühlmittels im Rohrabschnitt im wesentlichen konstant bleibt.

In Figur 31 ist das Rohr 38 zu sehen, welches von einer Lamelle 42 umgeben ist. Mit unterbrochenen Linien ist der Rohrquerschnitt im Bereich des Schnittes B-B dargestellt. Der Rohrquerschnitt kann bevorzugt kontinuierlich abnehmen, um wirklich über die gesamte Länge des in der Baugruppe wirksamen Rohrabschnitts die Sättigungstemperatur konstant zu halten.

Die Durchmesserverringerung, die in Figur 31 dargestellt ist, kann schwer zu fertigen sein, deshalb ist als Alternativlösung gemäß Figur 32 angedacht, den Strömungsquerschnitt des Rohres 38 durch Veränderung des Rohres, z.B. durch Abflachen, zu verändern. Gerade über eine solche Abflachung läßt sich der Strömungsquerschnitt besonders einfach kontinuierlich verringern.

Durch diese Konstruktion ist eine gleichmäßige Sättigungstemperatur über den gesamten Rohrabschnitt erzielbar.

Eine ähnliche Wirkung ließe sich durch Zwischenschaltung von Ventilen, z.B. weiteren thermostatischen Expansionsventilen, erzielen.

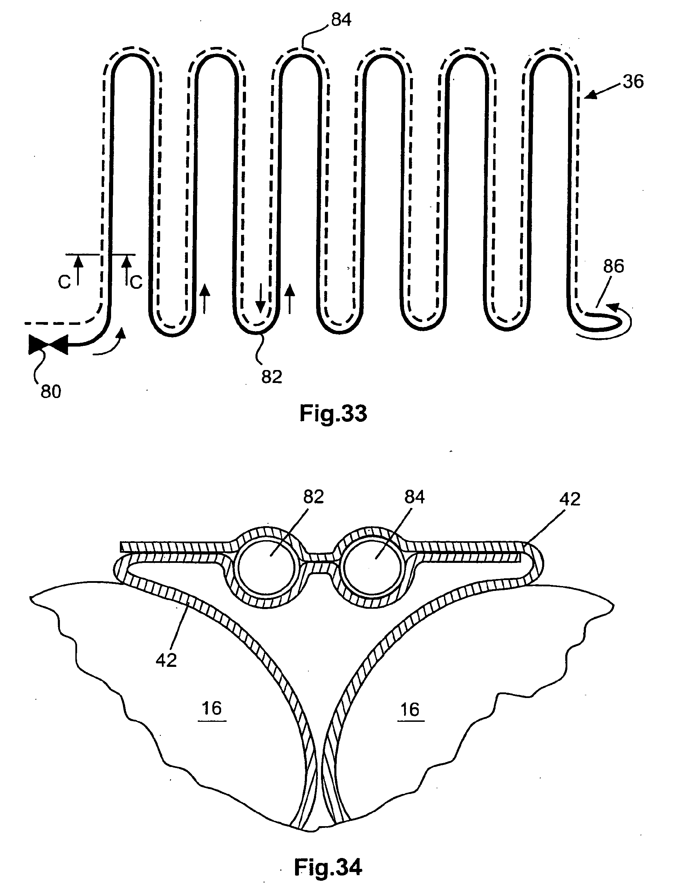

Bei der Ausführungsform nach Figur 33 sind zwei Rohrabschnitte 82, 84 parallel, mit geringem Abstand zueinander angeordnet und mäanderförmig geformt. Die Rohrabschnitte 82 (mit durchgehender Linie dargestellt) und 84 (mit unterbrochenen Linien symbolisiert) sind zwei unmittelbar aufeinanderfolgende Abschnitte eines einzigen Rohres 36. Am Einlaß, im Bereich des Ventils 80, strömt das zeotrope Kühlmittel durch den Rohrabschnitt 82 entlang von Batteriezellen 16 bis zu einem Umkehrpunkt 86 und von dort aus durch den Rohrabschnitt 84 parallel und gegenläufig zum Rohrabschnitt 82 bis zum Ausgang aus der Baugruppe.

In Figur 34 ist dargestellt, daß die beiden Rohrabschnitte 82, 84 in unmittelbarer Nähe zueinander angeordnet sind und damit thermisch in Kontakt stehen. Die beiden Rohrabschnitte 82, 84 können sich auch berühren. Lamellen 42 umgeben beide Rohrabschnitte 82, 84, so daß sich eine gemittelte Temperatur der Lamellen im Bereich der Batteriezellen 16 ergibt, obwohl die Sättigungstemperatur des Kühlmittels in den Rohrabschnitten 82, 84 unterschiedlich ist.

Bei den Ausführungsformen nach den Figuren 30 bis 34 sind die Rohre 36 Teil eines Kühlmittelkreislaufes, der nur abschnittsweise wiedergegeben ist.

Anstatt zweier Rohrabschnitte 82, 84 eines Rohres 36 können natürlich auch zwei voneinander getrennte Rohre vorgesehen sein, die gegenläufig durchströmt werden.

Bei der Ausführungsform nach Figur 35 sind drei Batteriereihen 101, 102 und 103 nebeneinander bzw. übereinander gestapelt, wobei zur Verdeutlichung der Kühlvorrichtung die Batteriezellen im vorderen Teil nicht dargestellt sind. Die Bezugszeichen 16 symbolisieren aber die Lage der Batteriezellen. Jeder Reihe 101 bis 103 ist ein Kühlmittel führendes Rohr 36, 36', 36" sowie zwei Lamellenbleche 105 bis 110 zugeordnet.

Die Lamellenbleche 105 bis 110 sind wellenförmig gebogen und liegen an einer Reihe von Batteriezellen 101 bis 103 an einer Ober- oder Unterseite an, und zwar über fast den halben Umfang. Die Lamellenbleche 105 bis 110 fassen sozusagen die Lamellen der einzelnen Batteriezellen 16 auf einer Seite der Batteriezellenreihe 101 bis 103 zusammen, damit die Anzahl der Einzelteile reduziert werden kann. Somit wird jede Batteriezelle 16 von einer ersten und einer zweiten Lamelle 42, 42' erfaßt, wobei sich die ersten Lamellen 42 zu dem ersten Lamellenblech 105, 107, 109 und die zweiten Lamellen 42' zu einem zweiten Lamellenblech 106, 108, 110 zusammenfassen lassen.

Dies ist auch in Figur 36 zu erkennen.

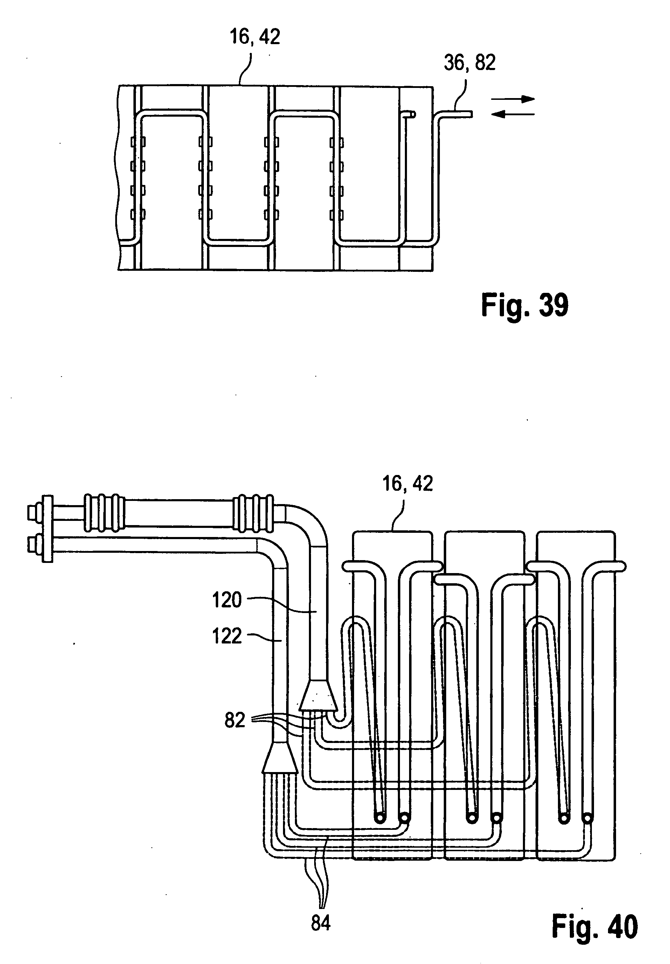

Wie bereits erwähnt, ist jeder Batteriezellenreihe 101 bis 103 ein Rohr 36, 36', 36" zugeordnet. Alle Rohre 36 bis 36" sind Teil eines Kühlkreislaufs und laufen zu einem Verteiler (siehe Fig. 40). Jedes Rohr 36 bis 36" hat zwei Rohrabschnitte oder Rohrhälften, bezogen auf die Rohrlänge. Der erste Abschnitt 82 ist der sogenannte Zulauf, der bis zu einem Umkehrpunkt 111 verläuft. Der zweite Rohrabschnitt 84 erstreckt sich vom Umkehrpunkt 111 bis zurück zum Kühlkreislauf oder Verteiler und bildet den Ablauf.

Der erste Rohrabschnitt 82 erstreckt sich auf einer Seite der Batteriezellen und der zweite Rohrabschnitt 84 auf der entgegengesetzten Seite (siehe Figur 36).

Der Verlauf der Rohre 36 bis 36" ist den Figuren 35 bis 39 sehr gut zu entnehmen. In Seitenansicht gesehen läßt sich der Rohrverlauf als zinnenförmig beschreiben, und zwar für jede Seite der Batteriezellenreihen. Mit Bezug auf die Figuren 35 und 39 verläuft jedes Rohr 36 zuerst am Rand der ersten Batteriezelle 16 in Axialrichtung "abwärts", dann in einem Kreissegmentbogen, angeschmiegt an die Batteriezelle, am Umfang entlang zum Hohlraum 112 zwischen zwei benachbarten Batteriezellen 36 und von hier wieder "aufwärts" zum entgegengesetzten axialen Ende, von wo aus wieder ein bogenförmiger Abschnitt zum darauffolgenden Hohlraum 112 verläuft. Am Umkehrpunkt 111, der im Bereich der zuletzt gekühlten Batteriezelle 16 liegt (siehe Figur 36) verläuft das Rohr 36 dann um diese letzte Batteriezelle herum, um zum anderen Rohrabschnitt 84 zu gelangen. Zu betonen ist, daß "auf- und abwärts" natürlich nicht im Sinne einer vertikalen Erstreckung zu verstehen ist, sondern nur symbolisch für entgegengesetzte axiale Richtungen parallel zur Längsachse der Batteriezellen 16 steht.

Wie man den Figuren 35 bis 39 entnehmen kann, liegen die in Axialrichtung verlaufenden Rohrabschnitte in den V- oder, je nach Radius, U-förmig gebogenen rinnenförmigen Übergangsabschnitten 113 zwischen benachbarten Lamellen 42. Die Rundung dieser Übergangsabschnitte 113 ist dabei dem Außenumfang des Rohres 36 angepaßt, damit sich eine möglichst große Berührfläche ergibt.

Die Toleranz der Außenumfänge der einzelnen Batteriezellen ist durchaus beachtlich, so daß die V-förmige Biegung zwischen benachbarten Lamellen 42 eines Lamellenblechs 105 bis 110 als Toleranzausgleich in Längsrichtung dient.

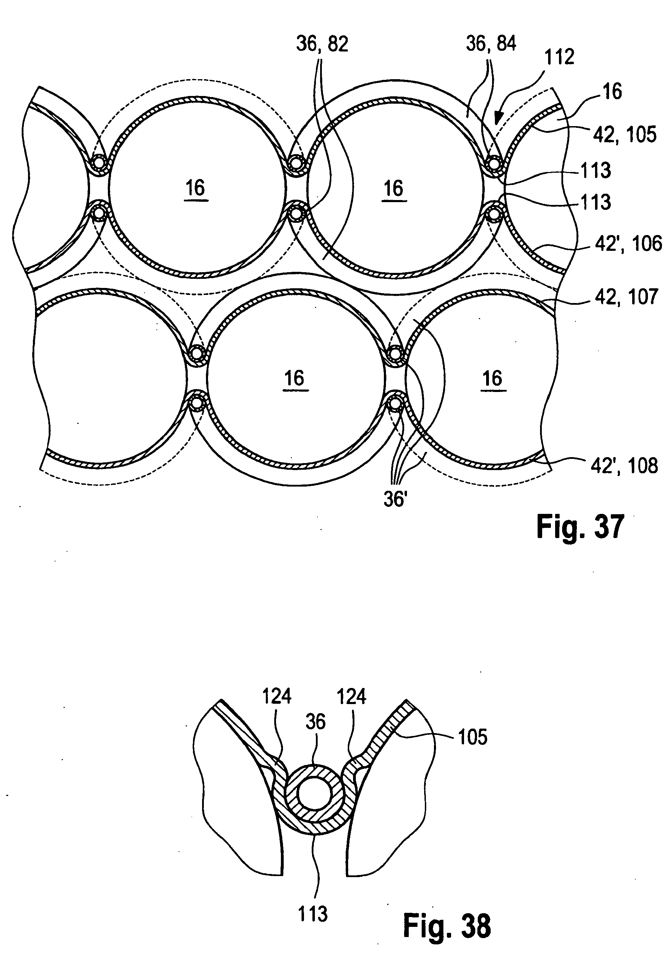

Um das Rohr 36 im V- oder U-förmigen Lamellenabschnitt gut zu fixieren und vor allem um einen maximalen Umschlingungswinkel zu erreichen, kann das Lamellenblech 105 bis 110, wie Figur 38 zeigt, lokale oder linienförmige, wulstartige, durch Umformen gebildete Vorsprünge 124 aufweisen.

Der Temperaturausgleich innerhalb einer Batteriezellenreihe 105 bis 110 wird durch die "gegenläufige" Kühlung erreicht. Betrachtet man sich beispielsweise die oberste Batteriezellenreihe 103 in Figur 36, erkennt man, daß die erste, rechte Batteriezelle 16 auch die zuerst gekühlte Batteriezelle dieser Reihe insgesamt ist und damit auch die erste vom Rohrabschnitt 82 gekühlte Batteriezelle 16, wogegen sie die letzte durch den zweiten Rohrabschnitt 84 gekühlte Batteriezelle ist.

Figur 40 zeigt nun, daß die einzelnen ersten Rohrabschnitte 82 von einem gemeinsamen Zuführrohr 120 ausgehen, wogegen die zweiten Rohrabschnitte 84 in einem gemeinsamen Auslaßrohr 122 zusammengefaßt werden. Nicht gezeigt ist der Rest des Kühlmittelkreislaufes.

## Patentansprüche

1. Antriebsbatteriebaugruppe eines Elektro-, Brennstoffzellen- oder Hybridfahrzeugs, mit mehreren nach außen durch jeweils eigene Zellengehäuse (18) geschlossenen, zu einem Zellenpaket zusammengefassten Batteriezellen (16), wenigstens einem Kühlfluid führenden Rohr (36) zum Abtransport von Wärmeenergie der Batteriezellen (16), und mit wenigstens einer wärmeführenden Lamelle (42), die wenigstens abschnittsweise flächig an wenigstens einem Zellengehäuse (18) anliegt, **dadurch gekennzeichnet, dass** die Lamelle (42) vom Rohr (36) ausgeht und am Rohr (36) befestigt ist, der Bereich des Rohres (36), an dem eine Lamelle (42) befestigt ist, innerhalb des Zellenpakets, im Hohlraum zwischen benachbarten Batteriezellen (16) verläuft und die Lamelle (42) eine Festkörper-Wärmebrücke zwischen der kontaktierten Batteriezelle (16) und dem Rohr (36) bildet, um Wärme aus der Batteriezelle (16) in Richtung des Rohres (36) abzutransportieren.

2. Antriebsbatteriebaugruppe nach Anspruch 1, **dadurch gekennzeichnet, dass** die Lamelle (42) gegen das Zellengehäuse (18) drückt.

3. Antriebsbatteriebaugruppe nach Anspruch 1 oder 2, **dadurch gekennzeichnet, dass** sich die Lamelle (42) an wenigstens ein Zellengehäuse (18) über eine Preßpassung an dessen Umfang anschmiegt.

4. Antriebsbatteriebaugruppe nach einem der vorhergehenden Ansprüche, **dadurch gekennzeichnet, dass** die Lamelle (42) das Rohr (36) abschnittsweise umschließt.

5. Antriebsbatteriebaugruppe nach einem der vorhergehenden Ansprüche, **dadurch gekennzeichnet, dass** die Lamelle (42) am Rohr (36) durch Kleben, Schweißen, Löten oder eine mechanische Befestigung unmittelbar angebracht ist.

6. Antriebsbatteriebaugruppe nach einem der vorhergehenden Ansprüche, **dadurch gekennzeichnet, dass** die Lamelle (42) das Rohr (36) zumindest teilweise unter Bildung einer Preßpassung umgreift, um am Rohr (36) befestigt zu sein.

7. Antriebsbatteriebaugruppe nach einem der vorhergehenden Ansprüche, **dadurch gekennzeichnet, dass** die Batteriezellen (16) eine Längsachse haben und die Lamelle (42) in Richtung der Längsachse (A) gesehen über mehr als 90' des Umfangs am Zellengehäuse (18) anliegt.

8. Antriebsbatteriebaugruppe nach einem der vorhergehenden Ansprüche, **dadurch gekennzeichnet, dass** wenigstens 40 % der Außenumfangsfläche des Zellengehäuses (18) von wenigstens einer Lamelle kontaktiert werden.

9. Antriebsbatteriebaugruppe nach einem der vorhergehenden Ansprüche, **dadurch gekennzeichnet, dass** die Batteriezellen (16) zwischen mehreren, an entgegengesetzten Außenumfangsabschnitten des Zellengehäuses (18) angreifenden Lamellen (42) geklemmt sind.

10. Antriebsbatteriebaugruppe nach einem der vorhergehenden Ansprüche, **dadurch gekennzeichnet, dass** die Zellengehäuse (18) zylindrisch, insbesondere kreiszylindrisch sind und sich die Lamelle (42) mäanderförmig an Zellen (16) unterschiedlicher Reihen entlang erstreckt.

11. Antriebsbatteriebaugruppe nach einem der vorhergehenden Ansprüche, **dadurch gekennzeichnet, dass** sich Lamellenabschnitte benachbarter Zellen (16) nicht berühren.

12. Antriebsbatteriebaugruppe nach einem der vorhergehenden Ansprüche, **dadurch gekennzeichnet, dass** das Rohr (36) im Bereich einer benachbarten Batteriezelle (16) abschnittsweise seitlich abgeflacht ist.

13. Antriebsbatteriebaugruppe nach Anspruch 12, **dadurch gekennzeichnet, dass** das Rohr (36) außerhalb des abgeflachten Abschnitts (51) einen kreiszylindrischen Querschnitt besitzt.

14. Antriebsbatteriebaugruppe nach Anspruch 12 oder 13, **dadurch gekennzeichnet, dass** das Rohr (36) wenigstens einen längs der Zellenlängsachse (A) verlaufenden und wenigstens einen quer zur Zellenlängsachse (A) verlaufenden Abschnitt (38, 40) besitzt und dass der quer verlaufende Abschnitt (40) teilweise abgeflacht ist.

15. Antriebsbatteriebaugruppe nach einem der Ansprüche 12 bis 14, **dadurch gekennzeichnet, dass** die Zellengehäuse (18) kreiszylindrisch sind und sich das Rohr (36) zumindest teilweise in die Umhüllende benachbarter Zellen (16) erstreckt, wobei der abgeflachte, quer verlaufende Abschnitt (51) außerhalb der Umhüllenden liegt.

16. Antriebsbatteriebaugruppe nach einem der Ansprüche 12 bis 15, **dadurch gekennzeichnet, dass** der quer verlaufende Abschnitt (40) einseitig und auf der der Zelle (16) zugewandten Seite abgeflacht ist.

17. Antriebsbatteriebaugruppe nach einem der vorhergehenden Ansprüche, **dadurch gekennzeichnet, dass** sich der Bereich des Rohres (36), an dem die Zellen (16) befestigt sind, am Außenrand des Zellenpakets erstreckt.

18. Antriebsbatteriebaugruppe nach einem der vorhergehenden Ansprüche, **dadurch gekennzeichnet, dass** sich das Rohr (36) in Längsrichtung der Zellen (16) abwechselnd auf und abwärts erstreckt.

19. Antriebsbatteriebaugruppe nach einem der vorhergehenden Ansprüche, **dadurch gekennzeichnet, dass** Batteriezellen (16) außenseitig in unterschiedlichem Ausmaß von den zugeordneten Lamellen (42) kontaktiert werden.

20. Antriebsbatteriebaugruppe nach Anspruch 19, **dadurch gekennzeichnet, dass** die näher am zugeordneten Rohr (36) angeordneten Batteriezellen (16) eine geringere Anlagefläche mit der Lamelle (42) besitzen als die entfernteren.

21. Antriebsbatteriebaugruppe nach Anspruch 19 oder 20, **dadurch gekennzeichnet, dass** die Lamelle (42) im Bereich eines Zellengehäuses (18) wenigstens eine Ausnehmung (58) oder Vertiefung (60) besitzt, um die Anlagefläche zu verringern.

22. Antriebsbatteriebaugruppe nach einem der vorhergehenden Ansprüche, **dadurch gekennzeichnet, dass** die Lamelle (42) zumindest im Bereich der Anlage am Zellengehäuse (18) mit einer elektrischen Isolation (70) versehen ist.

23. Antriebsbatteriebaugruppe nach Anspruch 22, **dadurch gekennzeichnet, dass** die Isolation (70) durch Beschichtung der Lamelle (42) erzeugt ist.

24. Antriebsbatteriebaugruppe nach Anspruch 22 oder 23, **dadurch gekennzeichnet, dass** die Lamelle (42) im Bereich der Anlage am Rohr (36) ohne Isolation ausgebildet ist.

25. Antriebsbatteriebaugruppe nach einem der Ansprüche 22 bis 24, **dadurch gekennzeichnet, dass** die Isolation (70) durch Walzen oder Kaschieren aufgebracht ist.

26. Antriebsbatteriebaugruppe nach einem der Ansprüche 22 bis 25, **dadurch gekennzeichnet, dass** die vorgefertigten Zellengehäuse (18) selbst ohne außenseitige Isolation (70) ausgeführt sind und die isolierten Lamellen (42) benachbarte Zellen (16) zueinander elektrisch isolieren.

27. Antriebsbatteriebaugruppe nach einem der vorgehenden Ansprüchen, **gekennzeichnet durch** wenigstens ein, ein zeotropes Kühlmittel führendes Rohr (36) zum Abtransport von Wärmeenergie der Batteriezellen (16) wobei der innerhalb der Baugruppe liegende Rohrabschnitt so ausgebildet ist, daß das Kühlmittel darin einem solchen Druckabfall unterliegt, daß die Sättigungstemperatur des Kühlmittels im Rohrabschnitt im wesentlichen konstant bleibt.

28. Antriebsbatteriebaugruppenach einem der vorgehenden Ansprüche, **gekennzeichnet durch** mehrere ein insbesondere zeotropes Kühlmittel führende Rohrabschnitte (82, 84), die innerhalb der Baugruppe in unmittelbarem thermischen Kontakt stehen und gegenläufig durchströmt werden.

29. Antriebsbatteriebaugruppe nach Anspruch 28, **dadurch gekennzeichnet, dass** die Rohrabschnitte (82, 84) parallel zueinander verlaufen.

30. Antriebsbatteriebaugruppe nach Anspruch 28 oder 29, **dadurch gekennzeichnet, dass** die Rohrabschnitte (82, 84) aufeinanderfolgende Abschnitte desselben Rohres (36) oder Abschnitte unterschiedlicher Rohre (36) sind.

31. Antriebsbatteriebaugruppe nach einem der Ansprüche 28 bis 30, **dadurch gekennzeichnet, dass** die Lamelle bzw. die Lamellen von beiden Rohrabschnitten (82, 84) gemeinsam ausgehen.

32. Antriebsbatteriebaugruppe nach einem der vorhergehenden Ansprüche, **dadurch gekennzeichnet, dass** Batteriezellen (16), vorzugsweise alle Batteriezellen (16), von einer ersten und einer zweiten Lamelle (42, 42') erfasst und gekühlt werden, die vor bzw. hinter einem Strömungsumkehrpunkt liegen.

33. Antriebsbatteriebaugruppe nach Anspruch 32, **dadurch gekennzeichnet, dass** jeder Batteriezellenreihe zur Kühlung je ein Rohr (36) zugeordnet ist.

34. Antriebsbatteriebaugruppe nach Anspruch 32 oder 33, **dadurch gekennzeichnet, dass** das Rohr (36) in Fluidströmungsrichtung in zwei hintereinanderliegende Rohrabschnitte unterteilt ist, wobei jede Batteriezelle (16) einer Reihe mit jedem Rohrabschnitt (82, 84) über eine Lamelle (42, 42') thermisch gekoppelt ist, so dass jede Batteriezelle (16) mit beiden Rohrabschnitten (82, 84) thermisch gekoppelt ist.

35. Antriebsbatteriebaugruppe nach einem der Ansprüche 32 bis 34, **dadurch gekennzeichnet, dass** der erste Rohrabschnitt (82) in Fluidströmungsrichtung nacheinander mit Batteriezellen (16) thermisch gekoppelt ist und dass der zweite Rohrabschnitt (84) in Fluidströmungsrichtung, beginnend von der zuletzt bis zu der zuerst mit dem ersten Rohrabschnitt (82) gekoppelten Batteriezelle (16), thermisch gekoppelt ist.

36. Antriebsbatteriebaugruppe nach einem der Ansprüche 32 bis 35, **dadurch gekennzeichnet, dass** eine Lamelle (42, 42') zumindest zwei benachbarte Batteriezellen (16) kontaktiert und sich V-förmig in den Hohlraum zwischen diesen erstreckt.

37. Antriebsbatteriebaugruppe nach Anspruch 36, **dadurch gekennzeichnet, dass** sich die Lamelle (42, 42') im Scheitelpunkt des "v" um das Rohr (36) legt.

## Claims

1. A drive battery assembly of an electric, fuel cell, or hybrid vehicle, comprising a plurality of battery cells (16) which are closed to the outside by respective separate cell housings (18) and are combined to form a cell package, at least one pipe (36), carrying cooling fluid, for dissipating thermal energy of the battery cells (16), and at least one heat-carrying lamella (42) which rests by at least part of its surface against at least one cell housing (18), **characterized in that** the lamella (42) starts from the pipe (36) and is attached to the pipe (36), the portion of the pipe (36) to which a lamella (42) is attached extends inside the cell package in the hollow space between adjacent battery cells (16), and the lamella (42) constitutes a solid-state thermal bridge between the contacted battery cell (16) and the pipe (36) to dissipate heat from the battery cell (16) towards the pipe (36).

2. The drive battery assembly according to claim 1, **characterized in that** the lamella (42) presses against the cell housing (18).

3. The drive battery assembly according to claim 1 or 2, **characterized in that** the lamella (42) snugly fits to the circumference of at least one cell housing (18) by means of a press fit.

4. The drive battery assembly according to any of the preceding claims, **characterized in that** the lamella (42) encloses part of the pipe (36).

5. The drive battery assembly according to any of the preceding claims, **characterized in that** the lamella (42) is directly mounted to the pipe (36) by gluing, welding, brazing or a mechanical attachment means.

6. The drive battery assembly according to any of the preceding claims, **characterized in that** the lamella (42) engages at least partly around the pipe (36) to form a press fit in order to be attached to the pipe (36).

7. The drive battery assembly according to any of the preceding claims, **characterized in that** the battery cells (16) have a longitudinal axis and, viewed in the direction of the longitudinal axis (A), the lamella (42) rests against the cell housing (18) by more than 90 degrees of the circumference.

8. The drive battery assembly according to any of the preceding claims, **characterized in that** at least 40% of the outer circumferential surface of the cell housing (18) is contacted by at least one lamella.

9. The drive battery assembly according to any of the preceding claims, **characterized in that** the battery cells (16) are clamped between a plurality of lamellas (42) engaging opposite outer circumferential sections of the cell housing (18).

10. The drive battery assembly according to any of the preceding claims, **characterized in that** the cell housings (18) are cylindrical, in particular circular-cylindrical, and the lamella (42) extends in a meander shape along cells (16) of different rows.

11. The drive battery assembly according to any of the preceding claims, **characterized in that** lamella sections of adjacent cells (16) do not contact each other.

12. The drive battery assembly according to any of the preceding claims, **characterized in that** the pipe (36) is laterally flattened in sections in the region of an adjacent battery cell (16).

13. The drive battery assembly according to claim 12, **characterized in that** the pipe (36) has a circular-cylindrical cross-section outside the flattened section (51).

14. The drive battery assembly according to claim 12 or 13, **characterized in that** the pipe (36) has at least one section (38) extending longitudinally to the longitudinal axis (A) of the cell and at least one section (40) extending transversely to the longitudinal axis (A) of the cell, and that the transversely extending section (40) is partly flattened.

15. The drive battery assembly according to any of claims 12 to 14, **characterized in that** the cell housings (18) are circular-cylindrical and the pipe (36) extends at least partly into the envelope of adjacent cells (16), the flattened, transversely extending section (51) being located outside the envelope.

16. The drive battery assembly according to any of claims 12 to 15, **characterized in that** the transversely extending section (40) is flattened on one side, on the side facing the cell (16).

17. The drive battery assembly according to any of the preceding claims, **characterized in that** the portion of the pipe (36) to which the cells (16) are attached extends on the outer edge of the cell package.

18. The drive battery assembly according to any of the preceding claims, **characterized in that** the pipe (36) extends alternately upwards and downwards in the longitudinal direction of the cells (16).

19. The drive battery assembly according to any of the preceding claims, **characterized in that** battery cells (16) are contacted to different degrees on the outside by the associated lamellas (42).

20. The drive battery assembly according to claim 19, **characterized in that** the battery cells (16) arranged closer to the associated pipe (36) have a smaller area of contact with the lamella (42) than the more distant ones.

21. The drive battery assembly according to claim 19 or 20, **characterized in that** in the region of a cell housing (18), the lamella (42) has at least one recess (58) or depression (60) to reduce the contact area.

22. The drive battery assembly according to any of the preceding claims, **characterized in that** the lamella (42) is provided with an electrical insulation (70) at least in the region of contact with the cell housing (18).

23. The drive battery assembly according to claim 22, **characterized in that** the insulation (70) is produced by coating the lamella (42).

24. The drive battery assembly according to claim 22 or 23, **characterized in that** in the region of contact with the pipe (36), the lamella (42) is formed without insulation.

25. The drive battery assembly according to any of claims 22 to 24, **characterized in that** the insulation (70) is applied by rolling or laminating.

26. The drive battery assembly according to any of claims 22 to 25, **characterized in that** the prefabricated cell housings (18) are configured without an exterior insulation (70) of their own, and the insulated lamellas (42) electrically insulate adjacent cells (16) in relation to one another.

27. The drive battery assembly according to any of the preceding claims, **characterized by** at least one pipe (36), carrying a zeotropic cooling agent, for dissipating thermal energy of the battery cells (16), the pipe section located inside the assembly being formed such that the cooling agent therein is subjected to such a pressure drop that the saturation temperature of the cooling agent in the pipe section remains substantially constant.

28. The drive battery assembly according to any of the preceding claims, **characterized by** a plurality of pipe sections (82, 84) which carry a cooling agent that is more particularly zeotropic and which are in direct thermal contact inside the assembly and have flows passing through them in opposite directions.

29. The drive battery assembly according to claim 28, **characterized in that** the pipe sections (82, 84) run parallel to each other.

30. The drive battery assembly according to claim 28 or 29, **characterized in that** the pipe sections (82, 84) are successive sections of the same pipe (36) or sections of different pipes (36).

31. The drive battery assembly according to any of claims 28 to 30, **characterized in that** the lamella or lamellas jointly start from both pipe sections (82, 84).

32. The drive battery assembly according to any of the preceding claims, **characterized in that** battery cells (16), preferably all battery cells (16), are covered and cooled by first and second lamellas (42, 42') which are located upstream and, respectively, downstream of a flow reversal point.

33. The drive battery assembly according to claim 32, **characterized in that** each battery cell row has one respective pipe (36) assigned to it for cooling.

34. The drive battery assembly according to claim 32 or 33, **characterized in that** the pipe (36) is subdivided into two pipe sections positioned one behind the other in the direction of fluid flow, each battery cell (16) of one row being thermally coupled to each pipe section (82, 84) via a lamella (42, 42'), so that each battery cell (16) is thermally coupled to both pipe sections (82, 84).

35. The drive battery assembly according to any of claims 32 to 34, **characterized in that** the first pipe section (82) is thermally coupled to battery cells (16) in succession in the direction of fluid flow and that the second pipe section (84) is thermally coupled in the direction of fluid flow, starting from the battery cell (16) last coupled to the first pipe section (82) up to the battery cell (16) first coupled to the first pipe section (82).

36. The drive battery assembly according to any of claims 32 to 35, **characterized in that** one lamella (42, 42') contacts at least two adjacent battery cells (16) and extends in a V shape into the hollow space therebetween.

37. The drive battery assembly according to claim 36, **characterized in that** the lamella (42, 42') engages around the pipe (36) in the vertex of the "v".

## Revendications

1. Ensemble de batterie d'entraînement d'un véhicule électrique, à cellules de combustible ou hybride, comportant plusieurs cellules de batterie (16) fermées chacune vis-à-vis de l'extérieur par un boîtier de cellule (18) propre et réunies pour former un paquet de cellules, et au moins un tube (36) dans lequel circule un fluide de refroidissement pour évacuer de l'énergie calorifique des cellules de batterie (16), et au moins une lamelle (42) caloporteuse qui est en appui au moins par tronçons à plat sur au moins un boîtier de cellule (18), **caractérisé en ce que** la lamelle (42) part du tube (36) et est fixée sur le tube (36), la zone du tube (36) dans laquelle est fixée une lamelle (42) s'étendant à l'intérieur du paquet de cellules, dans la cavité entre des cellules de batterie (16) voisines, et la lamelle (42) formant un pont thermique de corps solide entre la cellule de batterie (16) mise en contact et le tube (36) pour évacuer de la chaleur hors de la cellule de batterie (16) en direction du tube (36).

2. Ensemble de batterie d'entraînement selon la revendication 1, **caractérisé en ce que** la lamelle (42) appuie contre le boîtier de cellule (18).

3. Ensemble de batterie d'entraînement selon la revendication 1 ou 2, **caractérisé en ce que** la lamelle (42) épouse au moins un boîtier de cellule (18) par l'intermédiaire d'un ajustage serré sur sa périphérie.

4. Ensemble de batterie d'entraînement selon l'une des revendications précédentes, **caractérisé en ce que** la lamelle (42) entoure le tube (36) par tronçons.

5. Ensemble de batterie d'entraînement selon l'une des revendications précédentes, **caractérisé en ce que** la lamelle (42) est montée directement sur le tube (36) par collage, par soudage, par brasage ou par une fixation mécanique.

6. Ensemble de batterie d'entraînement selon l'une des revendications précédentes, **caractérisé en ce que** la lamelle (42) entoure au moins partiellement le tube (36) en formant un ajustage serré pour être fixée sur le tube (36).

7. Ensemble de batterie d'entraînement selon l'une des revendications précédentes, **caractérisé en ce que** les cellules de batterie (16) ont un axe longitudinal, et la lamelle (42), vue en direction de l'axe longitudinal (A), est en appui contre le boîtier de cellule (18) sur plus de 90° de la périphérie.

8. Ensemble de batterie d'entraînement selon l'une des revendications précédentes, **caractérisé en ce qu'**au moins 40 % de la surface périphérique extérieure du boîtier de cellule (18) sont mis en contact par au moins une lamelle.

9. Ensemble de batterie d'entraînement selon l'une des revendications précédentes, **caractérisé en ce que** les cellules de batterie (16) sont serrées entre plusieurs lamelles (42) attaquant des tronçons périphériques extérieurs opposés du boîtier de cellule (18).

10. Ensemble de batterie d'entraînement selon l'une des revendications précédentes, **caractérisé en ce que** les boîtiers de cellules (18) sont cylindriques, en particulier circulaires cylindriques, et la lamelle (42) s'étend en méandres le long de cellules (16) de différentes rangées.

11. Ensemble de batterie d'entraînement selon l'une des revendications précédentes, **caractérisé en ce que** des tronçons de lamelles de cellules (16) voisines ne se touchent pas.

12. Ensemble de batterie d'entraînement selon l'une des revendications précédentes, **caractérisé en ce que** dans la zone d'une cellule de batterie (16) voisine, le tube (36) est latéralement aplati par tronçons.

13. Ensemble de batterie d'entraînement selon la revendication 12, **caractérisé en ce que** le tube (36) possède en dehors du tronçon (51) aplati une section transversale circulaire cylindrique.

14. Ensemble de batterie d'entraînement selon la revendication 12 ou 13, **caractérisé en ce que** le tube (36) possède au moins un tronçon s'étendant le long de l'axe longitudinal (A) de cellule et au moins un tronçon (38, 40) s'étendant transversalement à l'axe longitudinal (A) de cellule, et **en ce que** le tronçon (40) s'étendant transversalement est partiellement aplati.

15. Ensemble de batterie d'entraînement selon l'une des revendications 12 à 14, **caractérisé en ce que** les boîtiers de cellules (18) sont circulaires cylindriques, et le tube (36) s'étend au moins partiellement dans l'enveloppe de cellules (16) voisines, le tronçon (51) aplati qui s'étend transversalement se trouvant en dehors de l'enveloppe.

16. Ensemble de batterie d'entraînement selon l'une des revendications 12 à 15, **caractérisé en ce que** le tronçon (40) s'étendant transversalement est aplati d'un côté, sur le côté tourné vers la cellule (16).

17. Ensemble de batterie d'entraînement selon l'une des revendications précédentes, **caractérisé en ce que** la zone du tube (36) dans laquelle sont fixées les cellules (16) s'étend sur le bord extérieur du paquet de cellules.

18. Ensemble de batterie d'entraînement selon l'une des revendications précédentes, **caractérisé en ce que** le tube (36) s'étend en alternance vers le haut et vers le bas en direction longitudinale des cellules (16).

19. Ensemble de batterie d'entraînement selon l'une des revendications précédentes, **caractérisé en ce que** les cellules de batterie (16) sont mises en contact par les lamelles (42) associées, sur la face extérieure et dans différentes mesures.

20. Ensemble de batterie d'entraînement selon la revendication 19, **caractérisé en ce que** les cellules de batterie (16) qui sont plus proches du tube (36) associé possèdent une surface d'appui avec la lamelle (42) qui est plus faible que celles qui sont plus éloignées.

21. Ensemble de batterie d'entraînement selon la revendication 19 ou 20, **caractérisé en ce que** dans la zone d'un boîtier de cellule (18), la lamelle (42) possède au moins un évidement (58) ou un renfoncement (60) pour réduire la surface d'appui.

22. Ensemble de batterie d'entraînement selon l'une des revendications précédentes, **caractérisé en ce qu'**au moins dans la zone d'appui sur le boîtier de cellule (18), la lamelle (42) est pourvue d'une isolation (70) électrique.

23. Ensemble de batterie d'entraînement selon la revendication 22, **caractérisé en ce que** l'isolation (70) est produite par revêtement de la lamelle (42).

24. Ensemble de batterie d'entraînement selon la revendication 22 ou 23, **caractérisé en ce que** la lamelle (42) est réalisée sans isolation dans la zone d'appui sur le tube (36).

25. Ensemble de batterie d'entraînement selon l'une des revendications 22 à 24, **caractérisé en ce que** l'isolation (70) est appliquée par laminage ou par contrecollage.

26. Ensemble de batterie d'entraînement selon l'une des revendications 22 à 25, **caractérisé en ce que** les boîtiers de cellules (18) préfabriqués sont eux-mêmes réalisés sans isolation (70) extérieure, et les lamelles (42) isolées isolent électriquement les unes par rapport aux autres des cellules (16) voisines.

27. Ensemble de batterie d'entraînement selon l'une des revendications précédentes, **caractérisé par** au moins un tube (36) dans lequel circule un fluide de refroidissement zéotrope pour évacuer de l'énergie calorifique des cellules de batterie (16), le tronçon de tube situé à l'intérieur de l'ensemble étant réalisé de telle sorte que le fluide de refroidissement y est soumis à une chute de pression telle que la température de saturation du fluide de refroidissement dans le tronçon de tube reste sensiblement constante.

28. Ensemble de batterie d'entraînement selon l'une des revendications précédentes, **caractérisé par** plusieurs tronçons de tube (82, 84) dans lesquels circule un fluide de refroidissement en particulier zéotrope, qui sont en contact thermique direct à l'intérieur de l'ensemble et sont traversés par des écoulements opposés.

29. Ensemble de batterie d'entraînement selon la revendication 28, **caractérisé en ce que** les tronçons de tube (82, 84) s'étendent parallèlement les uns aux autres.

30. Ensemble de batterie d'entraînement selon la revendication 28 ou 29, **caractérisé en ce que** les tronçons de tube (82, 84) sont des tronçons successifs du même tube (36) ou des tronçons de différents tubes (36).

31. Ensemble de batterie d'entraînement selon l'une des revendications 28 à 30, **caractérisé en ce que** la lamelle ou les lamelles part(ent) en commun des deux tronçons de tube (82, 84).

32. Ensemble de batterie d'entraînement selon l'une des revendications précédentes, **caractérisé en ce que** des cellules de batterie (16), de préférence toutes les cellules de batterie (16), sont saisies et refroidies par des première et deuxième lamelles (42, 42') qui se situent en amont et en aval, respectivement, d'un point d'inversion d'écoulement.

33. Ensemble de batterie d'entraînement selon la revendication 32, **caractérisé en ce que** chaque rangée de cellules de batterie est associée à un tube (36) respectif pour le refroidissement.

34. Ensemble de batterie d'entraînement selon la revendication 32 ou 33, **caractérisé en ce que** le tube (36) est divisé en deux tronçons de tube successifs en direction d'écoulement de fluide, chaque cellule de batterie (16) d'une rangée étant couplée thermiquement à chaque tronçon de tube (82, 84) par l'intermédiaire d'une lamelle (42, 42'), de sorte que chaque cellule de batterie (16) est couplée thermiquement aux deux tronçons de tube (82, 84).

35. Ensemble de batterie d'entraînement selon l'une des revendications 32 à 34, **caractérisé en ce que** le premier tronçon de tube (82) en direction d'écoulement de fluide est successivement couplé thermiquement à des cellules de batterie (16), et le deuxième tronçon de tube (84) en direction d'écoulement de fluide est couplé thermiquement en partant de la dernière cellule de batterie (16) couplée au premier tronçon de tube (82) et en allant jusqu'à la première cellule de batterie (16) couplée au premier tronçon de tube (82).

36. Ensemble de batterie d'entraînement selon l'une des revendications 32 à 35, **caractérisé en ce qu'**une lamelle (42, 42') contacte au moins deux cellules de batterie (16) voisines et s'étend en forme de V dans la cavité entre celles-ci.

37. Ensemble de batterie d'entraînement selon la revendication 36, **caractérisé en ce que** la lamelle (42, 42') entoure le tube (36) au point de rebroussement du "V".
